Europäisches Patentamt

European Patent Office

Office européen des brevets

(19)

(11) Publication number: **0 149 878**

**B1**

(12)

# EUROPEAN PATENT SPECIFICATION

(45) Date of publication of patent specification: **09.09.87**

(51) Int. Cl.⁴: **B 29 C 55/02, B 29 C 55/16**

(21) Application number: **84300405.2**

(22) Date of filing: **24.01.84**

(54) **Link device for stretching sheet material and stretching apparatus using said link device.**

(43) Date of publication of application:
**31.07.85 Bulletin 85/31**

(45) Publication of the grant of the patent:
**09.09.87 Bulletin 87/37**

(84) Designated Contracting States:
**DE FR GB**

(56) References cited:
**DE-B-1 234 374**
**DE-B-1 274 337**
**JP-B- 447 155**
**US-A-3 195 177**
**US-A-3 276 071**
**US-A-3 491 402**

(73) Proprietor: **TORAY INDUSTRIES, INC.**
**2, Nihonbashi-Muromachi 2-chome Chuo-ku**
**Tokyo 103 (JP)**

(72) Inventor: **Yoshimura, Hiroshi**
**10-B2-14, Sonoyama 2-chome**
**Otsu-shi Shiga-ken, 520 (JP)**
Inventor: **Tagami, Yuichi**
**13-29, Akao-cho**
**Otsu-shi, 520 (JP)**

(74) Representative: **Ellis, John Clifford Holgate et al**
**MEWBURN ELLIS & CO. 2/3 Cursitor Street**
**London EC4A 1BQ (GB)**

Courier Press, Leamington Spa, England.

EP 0 149 878 B1

## Description

The present invention relates to a link device for stretching sheet material, for instance a thermoplastic synthetic resin film, in the longitudinal, transverse or biaxial direction and to a stretching apparatus using said link device.

Biaxial simultaneous stretching apparatuses using a link mechanism for a continuous synthetic resin film are proposed in Japanese Patent Publication No. SHO 43-5560 and Japanese Patent Publication No. SHO 44-7155.

The stretching apparatus disclosed in Japanese Patent Publication No. SHO 43-5560 has a pair of stretching devices provided at opposite sides along the longitudinal direction of the stretching apparatus. Each of the stretching devices comprises an endless link device comprising a plurality of link members arranged to form a pantograph structure, a plurality of sliding shoes provided at the bottom side of the endless link device, means for circulating the endless link device and a rail unit to guide slidably the sliding shoes. The means for circulating the endless link device comprises a first sprocket provided at the entrance of the stretching apparatus and a second sprocket provided at the exit of the stretching apparatus. The endless link device is meshed with the sprockets. The rail unit is provided between a position where the endless link device leaves from the first sprocket and a position where the endless link device connects with the second sprocket. The rail unit has an outside rail, a central rail and an inside rail. A first gauge between the outside and inside rails becomes narrow in the direction from the first sprocket to the second sprocket to reduce the height of and to expand the length of the pantograph structure for imparting a longitudinal stretching to the film. The sliding shoes comprise a series of outside shoes being slidably in contact with the outside rail, a series of central shoes being slidably in contact with the central rail and a series of inside shoes being slidably in contact with the inside rail. Each of the shoes is in contact with each of the rails at the bottom and side surfaces thereof. The gauge between the rail units provided at both sides along the stretching apparatus becomes wide in the direction from the first sprocket to the second sprocket to impart a transverse stretching to the film.

In the stretching apparatus disclosed in Japanese Patent Publication No. SHO 43-5560 mentioned above, an extremely large driving force is required on the sprocket, because the endless link device is supported movably on the rail via sliding shoes which slide in contact with the surface of the rail unit. In the stretching apparatus, moreover, the shoes are in surface contact with the rails at their side surfaces and are forcibly slid along the rails whilst moving from the entrance to the exit of the rails. This mechanism is a toggle mechanism and it brings about quite a large force acting between the rails and the shoes. Existence of such action runs counter to expectation of stability of circulation of the endless link device at a high speed operation of the stretching apparatus. In the stretching apparatus, further, it is not possible to provide the rail unit around the sprockets because if the rail unit is provided around the sprockets, there occurs an interference between the force acting on each of the sprockets and the force acting on each of the shoes through the endless link device meshing with each of the sprockets. Thus in the stretching apparatus, the rail unit is provided only between both of the sprockets. Such an arrangement of rail unit is not suitable for high speed operation of the stretching apparatus, because the shoes have to engage on and have to disengage from the rail at the entrance of the sprocket and at the exit of the sprocket respectively. In the stretching apparatus, furthermore, since a very large force acts on the rails as mentioned above, it is necessary to use rigidly built rails. When changing a stretching ratio in the longitudinal direction, it is necessary to change the gauge between the outside rail and the inside rail. Changing the gauge between the rigidly built rails on the rail unit cannot be accomplished with a simple mechanism for varying and adjusting the gauge. Accordingly, in the stretching apparatus, a rail unit is changed with another one having a different gauge between the outside rail and the inside rail for varying the stretching ratio. This changing work costs workers in a factory immense trouble. Actually, therefore, the factory has to prepare several stretching apparatuses having different gauges to produce stretched films having different stretching ratios if the factory wants to do so.

Japanese Patent Publication No. SHO 44-7155 teaches a stretching apparatus similar to the stretching apparatus shown in Japanese Patent Publication No. SHO 43-5560 mentioned above except for rotatable rollers provided to support the endless link device on the rail unit instead of the sliding shoes. Each of the rotatable rollers for supporting the weight of the endless link device is constructed by a caster roller which is swingable in a horizontal plane. Also in this embodiment, the stability of circulation of the endless link device at high speed can not be accomplished, because the caster rollers receive centrifugal force during travel of the endless link device around the sprockets and the directions of the caster rollers become unstable at that time. This phenomenon was clearly observed on the practical operation of the stretching apparatus having the same construction disclosed in Japanese Patent Publication No. SHO 44-7155 at a speed of about 200 m/min. or more.

A further stretching apparatus is shown in US—A—3276071. This apparatus also includes an endless chain which represents a loop of link member units made up of a plurality of link members including short links and long links provided in a pantograph manner with links of the same length arranged adjacently in the running direction of the endless chain. Grippers hold the side edge of the sheet material and guide rollers engage guide rails located in such a way as to provide the desired stretching ratio of the sheet material in the longitudinal and transverse directions.

In certain embodiments of the apparatus shown in US—A—3276971 there are sub-links, each held substantially at a right angle to the running direction of the chain with a pivot of the link member unit constrained to move longitudinally along the sub-link. These sub-links are for the purpose of anchoring one end of a tension spring tending to close the grippers which hold the side edge of the sheet material. The endless chain is supported on sliding shoes arranged beneath pivots of the pantograph construction.

In each of the prior art constructions referred to above the link member units of the chain are supported either by sliding shoes or by a castor arrangement. This is of course a necessary feature if the gauge between the support is going to change as the pantograph stretches or contracts. The drawbacks which these arrangements produce have been referred to above.

According to the present invention we provide, as does US—A—3276071 in certain embodiments, a link device for stretching a sheet material constituting an endless chain which represents a loop of link member units made up of a plurality of link members including short links and long links pivoted in a pantograph manner with links of the same length being arranged adjacently in the running direction of the endless chain, sub-links, each held substantially at a right angle to the said running direction with a pivot of the link member unit constrained to move longitudinally along the sub-link, grippers to hold the side edge of the sheet material, and guide rollers engaging guide rails located in such a way as to provide the desired stretching ratio of the sheet material in the longitudinal and transverse directions. However, unlike US—A—3276071, the sub-links are used, not to anchor springs, but to form mountings for lines of rollers to support the link member units, each roller being pivotally mounted on a fixed part of a sub-link so that the paths traversed by the lines of rollers have a substantially constant gauge between them.

In the present invention thus constituted, the pantograph-like link member unit is not supported on sliders but supported on rollers. The roller, being attached to the sub-link which is attached substantially at a right angle to the running direction of the link member unit such that said roller can move in the running direction of the link member unit, can rotate smoothly. As a consequence the total running resistance of the endless chain is extremely reduced as compared with the conventional one. Accordingly the endless chain can be driven with a small force and in the section where the link member units mesh with the sprocket, the force can be reduced which is caused by the interference between the sprocket and the guide rail through the link member units.

Moreover, since the link member unit consists of long and short link members, it is possible to mesh the link member unit with the drive sprocket in the state where the short link is stretched to the limit or nearly to the limit, thereby avoiding any extremely large force caused by the interference between the drive sprocket and the rail through the link member units. Thus it is not necessary to cut off the rail, even in the above mentioned section, and as a consequence, high speed running can be attained with the rail made endless.

Moreover, since the force acting between the rail and the link is reduced even in sections other than in the above mentioned section, on account of the lower running resistance of the roller, stable running at high speed can be realized. Furthermore, since the sub-link is directed substantially at a right angle to the running direction of the link member unit and the roller moves with stability always in the running direction, the link member unit can run at a high speed with stability. Thus stretching of the sheet material can be accomplished at high speed and with stability.

Also, since the force acting on the rail is small due to a decrease in the running resistance, the gauge of the guide-rails, which regulate the degree of folding of the link member unit through regulation of the relative positions of the guide rollers, can be easily changed by a small force. Therefore, an adjuster for adjusting the gauge between the guide-rails can be installed and the degree of folding of the link member unit can be easily changed meeting the necessary production requirements.

These and other objects of the present invention will become more apparent and more readily appreciated from the following detailed description of the presently preferred exemplary embodiment of the present invention when taken in conjunction with the accompanying drawings, wherein:

Figure 1 is a schematic plan view showing a biaxial simultaneous stretching apparatus as one embodiment of the present invention;

Figure 2 is a partial oblique view of a link device illustrated in Fig. 1;

Figure 3 is a vertical sectional view taken along the line III—III of Fig. 2;

Figure 4 is a plan view of the device shown in Fig. 2;

Figure 5 is a plan view of a model of the link device in Fig. 4;

Figure 6 is a plan view of a variation of a link device according to the present invention;

Figure 7 is a plan view of a model of the link device illustrated in Fig. 6;

Figure 8 is a plan view of another variation of a link device according to the present invention;

Figure 9 is a plan view of a model of the link device illustrated in Fig. 8;

Figure 10 is a plan view of still another variation of a link device according to the present invention;

Figure 11 is a plan view of a model of the link device illustrated in Fig. 10;

Figure 12 is a plan view of one embodiment of the present invention with intermediate link units added to the link device;

Figure 13 is a plan view of a model of the link device illustrated in Fig. 12;

Figure 14 is a plan view of another embodiment of the present invention with intermediate link units added to the link device;

Figure 15 is a plan view of a model of the link device in Fig. 14;

Figure 16 is a plan view of one embodiment of the present invention with a gripper attached to the link member unit;

Figure 17 is a vertical sectional view of the link device wherein the roller is provided only at the lower part of the sub-link;

Figure 18 is a plan view of an example of a guide-rail arrangement in the case where the sheet material is to be stretched only in the longitudinal direction;

Figure 19 is a plan view of an example of a guide-rail arrangement in the case where the sheet material is to be stretched in the longitudinal direction and then in the transverse direction;

Figure 20 is a plan view of an example of a guide-rail arrangement in the case where the sheet material is to be stretched in the transverse direction and then in the longitudinal direction;

Figure 21 is a schematic plan view of a stretching device having only one sprocket for driving each of endless chains provided at both sides of the sheet material;

Figure 22 is a plan view showing the vicinity of the position where a decreasing pitch section begins;

Figure 23 is a plan view showing an example of the means for providing a small intersecting angle between a short link and a short link at the position where a decreasing pitch section begins;

Figure 24 is a vertical sectional view taken along XXIV—XXIV of Fig. 23;

Figure 25 is a plan view showing another example of a means for providing a small intersecting angle of a short link with a short link at the position where a decreasing pitch section begins;

Figure 26 is a plan view of a variation of the means illustrated in Fig. 25;

Figure 27 is a plan view of still another example of the means for providing a small intersecting angle of a short link with a short link at the position where a decreasing pitch section begins;

Figure 28 is a plan view of still another example of the means for providing a small intersecting angle of a short link with a short link at the position where a decreasing pitch section begins; and

Figure 29 is a plan view of still another example of a means for providing a small intersecting angle of a short link with a short link at the position where a decreasing pitch section begins.

Several embodiments of the present invention will be described below.

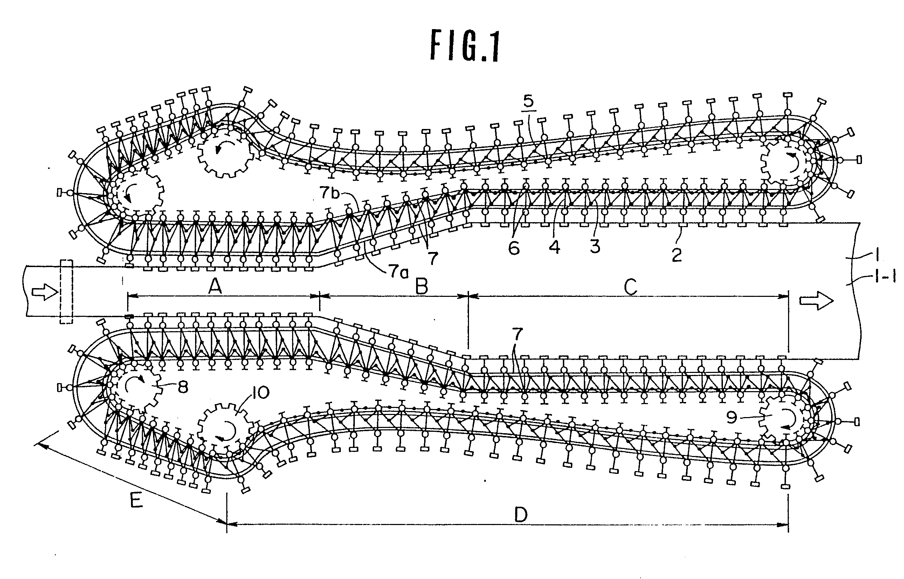

In Fig. 1 which illustrates a biaxial simultaneous stretching apparatus for a sheet material according to the present invention, a film 1-1 as a sheet material 1 to be stretched is transported in the direction of the arrow. The film 1-1 is clipped by the grippers 2, stretched biaxially in the longitudinal and transverse directions while being transported in the direction of the arrow. Each gripper 2 is attached to the sub-link 4 fitted on the pantograph-like link member unit 3. The sub-link 4 is held substantially at a right angle to the running direction of the link member unit 3. A plurality of such link member units 3 are connected together, forming an endless chain 5 in a loop form.

A roller 6 is attached to the link member unit 3. The roller 6 engages a guide-rail 7. There are provided a pair of rail units. One rail unit is provided for each endless chain 5. Each rail unit is composed of a pair of guide-rails 7. The guide-rail 7 is endless and the travel path of the link member unit 3 is regulated by the guide-rail 7.

The endless chain 5 is driven by sprockets. In the present example, three sprockets 8, 9, 10 are provided for each endless chain 5. For a drive sprocket, sprocket 9, or 10 is preferable.

The link member unit 3 is foldable, that is, can be shortened or lengthened through the movement of a plurality of link members which constitute said unit 3. The angle of folding of the link member unit 3 depends on the relative positions of the rollers 6 and said relative positions of the rollers 6 depend on the gauge of guide-rails 7. The angle of folding regulates the pitch of sub-links 4 and the pitch of grippers 2.

In this example the pitch of grippers 2 is set short on the pre-heating section A for the film 1-1. On the stretching section B following the pre-heating section A, the pitch of grippers 2 is gradually widened and at the same time the running path of the gripper 2 is gradually spread toward the end of the stretching section B. Thus the film 1-1 which is clipped on both side edges with the grippers 2 is stretched at the same time in the longitudinal direction and in the transverse direction in the stretching section B. In the heatset section C following the section B, the pitch of grippers 2 is set nearly constant. After the gripper 2 releases the film and then is turned at the sprocket 9, the pitch of grippers 2 is made the longest in a longest gripper pitch section D. Then in a decreasing pitch section E following said section D, the pitch of gripper 2 is reduced to the same pitch as that of the pre-heating section A. Through this cycle of lengthening and shortening of the gripper pitch, the film 1-1 can be continuously transported and stretched.

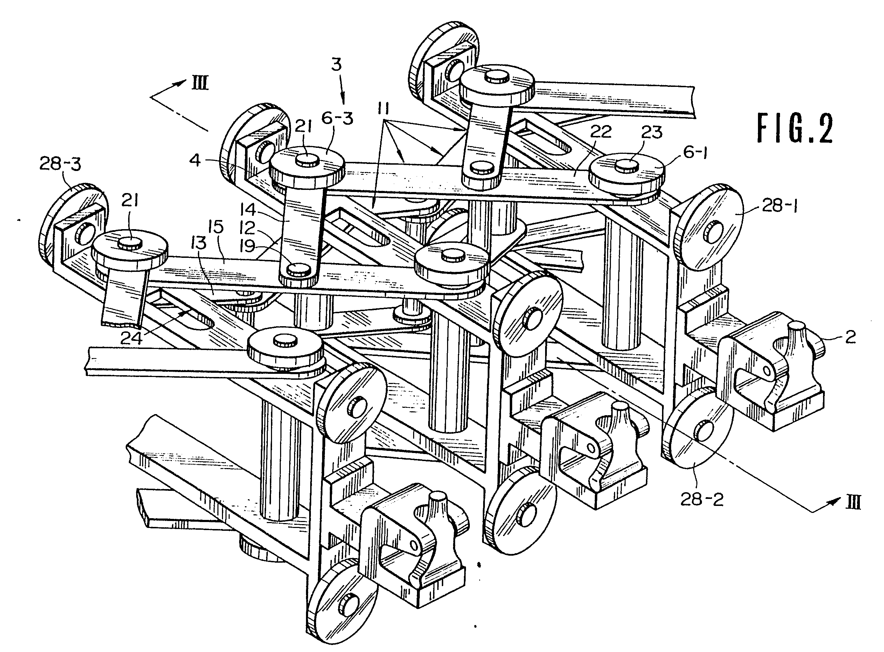

Next, referring to Figs. 2—5, a description of the pantograph-like link member unit 3 will be made.

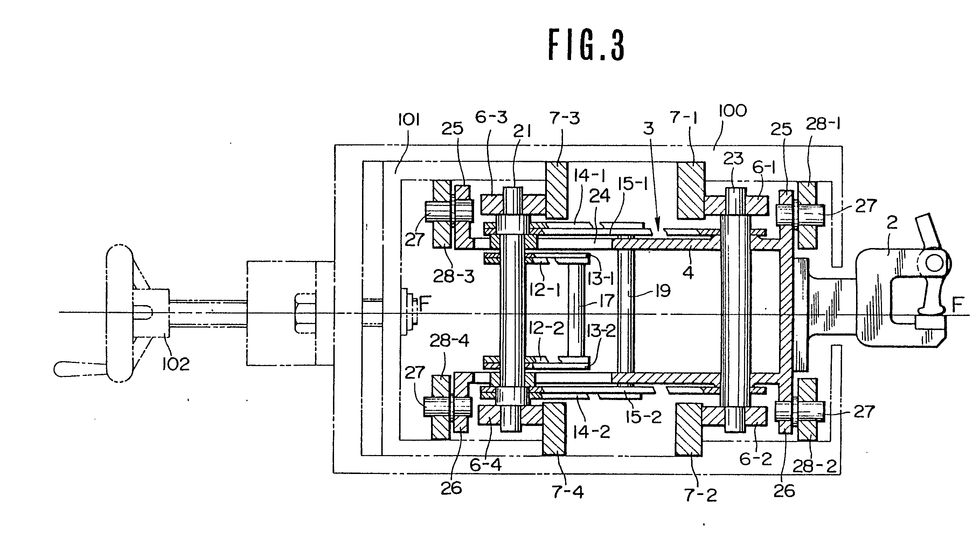

The link member unit 3 includes short and long link members 11 connected foldably like a pantograph. The pantograph arrangement is as follows. There are short links 12 and 13, and long links 14 and 15. As indicated in Fig. 3 this arrangement is symmetric with respect to the upper and lower side thereof, that is, the upper side of the pantograph is composed of short links 12-1 and 13-1 and long links 14-1 and 15-1, while the lower side of the pantograph is composed of short links 12-2 and 13-2, and long links 14-2 and 15-2.

Short links 12 and 13 are connected together by means of a connecting pin 17 provided at the junction 16, and long links 14 and 15 are connected together by means of a connecting pin 19 provided at the junction 18. Short link 12 and long link 14 as well as short link 13 and long link 15 are connected together by a connecting pin 21 at the junction 20. And adjacent link member units 3 are connected together by the connecting pin 21.

Long link 15 has an extended portion 22 on the side of the connecting pin 19. The extended portion 22 is about as long as the distance between the connecting pin 21 and the connecting pin 19 for long link 15. Between the extended portion 22 and the junction 20 is disposed the sub-link 4. The sub-link 4 is swingably connected with the extended portion 22 via the connecting pin 23. Thus the connecting pin 23 constitutes the junction between the sub-link 4 and the extended portion 22. The sub-link 4 is swingably connected with the junction 20 by the connecting pin 21. Meanwhile, the connecting pin 21 and the sub-link 4 are mutually slidable in a long slot 24 formed on the sub-link 4. Thus being rigidly connected at the connecting pin 23 and slidably connected at the connecting pin 21 against the link member unit 3, the sub-link 4 can be held always substantially at a right angle to the running direction of said unit 3.

As seen from Fig. 3, the sub-link 4 is an element with a laterally extending U-shaped section in the vertical direction. On the top side and bottom side of said laterally extending U-shaped element there are provided an upward extending portion 25 and a downward extending portion 26. The upward extending portion 25 and the downward extending portion 26 each has a support 27 fixed thereto. Each support 27 has a roller 28 which supports the link member unit 3 and carries the sub-link 4 in the running direction of the link member unit. The roller 28 is rotatably held on the support 27.

A gripper 2 for clipping on the side edge of the sheet material is protruded from the midway portion of the vertically extending portion of the sub-link 4.

At the upper and lower ends of the connecting pins 21 and 23 there are fitted guide-rollers 6 which are rotatable in the horizontal plane. It is preferred that guide-rollers are arranged vertically symmetric with respect to the plane F—F in which the sheet material is held by the gripper 2.

The guide-roller 6 engages the guide-rail 7. Thus, the guide-rollers 6-1 and 6-2 fitted to the connecting pin 23, respectively, engage the guide-rails 7-1 and 7-2. Meanwhile the guide-rollers 6-3 and 6-4 fitted to the connecting pin 21, respectively, engage the guide-rails 7-3 and 7-4. The guide-rails 7-1 and 7-2 are attached to the rail 100. The guide-rails 7-3 and 7-4 are attached to the rail 101 which is slidably fitted to the rail 100. The roller 28 rolls on the rails 100 and 101. Thus the rollers 28-1 and 28-2 move on the rail 100, while the rollers 28-3 and 28-4 move on the rail 101.

To the rail 101 is connected a gauge adjuster 102 which slides and shifts the rail 101 against the rail 100. Therefore, if the guide-rails 7-1, 7-2 are called guide-rail 7a and the guide-rails 7-3, 7-4 are called guide-rail 7b, the gauge between the guide-rail 7a and the guide-rail 7b can be adjusted by the action of the gauge adjuster 102. As modeled in Fig. 5, the degree of folding of the link member unit and the pitch of grippers 2 can be determined by adjusting the gauge between the guide-rails 7a and 7b.

In this example with the above constitution, guide-rails 7 are arranged according to the stretching ratio of the sheet material 1, and the gauge between the guide-rails 7a and 7b in a pair of guide-rails 7 is adjusted according to the stretching ratio of the sheet material 1 to be stretched. Thus through a spread-out arrangement of the guide-rails 7 provided on both sides of the sheet material 1, the running paths of the link member unit 3 which stretches the sheet material 1 in the transverse direction and of the gripper 2 can be determined. Meanwhile through a gauge adjustment between the guide-rails 7a and 7b by the gauge adjuster 102, the variation of the pitch of grippers 2 which stretch the sheet material 1 in the longitudinal direction can be determined.

The stretching in the longitudinal direction and in the transverse direction takes place simultaneously in the stretching section B.

The link member unit 3 runs supported on the rollers 28. The running resistance of the roller 28, which is free to roll, is remarkably lower than that of the conventional slider of the conventional apparatus. Moreover, in the roller 28 which is fitted to the sub-link 4, the direction of its rotational movement invariably agrees with the running direction of the link member unit 3, resulting in a low stabilized running resistance. The guide-roller 6 is equally rotatable and accordingly the running resistance remains equally low between the guide-rollers 6-3, 6-4 and guide-rails 7-3, 7-4 to which is applied the stretching force of the sheet material 1. As a result the total running resistance of the endless chain 5 is maintained low, and it is possible to drive the endless chain 5 with a small force.

As the driving force decreases, the force is reduced which is likely to be caused by the interference between the sprocket and the guide-rails 7-3, 7-4 through the link member unit 3. Since the link member unit 3 is composed of long and short link members, it is possible to make the link member unit 3 engage with the sprocket 10 in the state when the short links 12 and 13 are stretched nearly to the limit, and, as illustrated in Fig. 1, the sprocket 10 is taken as the drive sprocket. Thus it is possible to make the direction of the drive force transmitted from the drive sprocket 10 via short links 12, 13 to the link member unit 3 agree with the running direction of the link member unit 3, thereby making it possible to avoid the force caused by the interference between the sprocket 10 and the guide rails 7 through the link member unit 3. Therefore, unlike in the conventional apparatus, it is needless to cut off the guide-rail 7 between the entrance and exit of the sprocket, and it is easy to make the guide-rail 7 endless.

Since the guide rollers do not disengage from or engage with the guide rail at the entrance or exit of the sprocket due to the endless guide rail, the endless chain 5 runs smoothly, facilitating high speed running.

Even in the pre-heating section A, the stretching section B, and the heatset section C the roller 28 gives an effect of reducing the running resistance of the link member unit 3. Since the drive force to drive the endless chain 5 becomes small according to the decrease of the running resistance, the force of the guide roller 6 with which it grasps the guide rail 7 decreases, thereby decreasing the total running resistance of the endless chain. Moreover, as stated above, the roller 28 rolls always in the running direction of the link member unit and therefore the running resistance is maintained constant. Thus the link member unit 3 is driven smoothly and stably with a high speed, and accordingly the stable stretching of the sheet material 1 is obtained.

Since the force acting on the guide-rail 7 is small, the gauge between the guide-rails 7-3, 7-4 and the guide-rails 7-1, 7-2 can be easily adjusted by the gauge adjuster 102. Thus the longitudinal stretching ratio of the sheet material 1 can be set or changed easily and continuously. Further, it is possible to design such a rail structure in which a gauge adjuster 102 can be installed outside of the system. Therefore, the procedures necessary for changing the longitudinal stretching ratio in the conventional apparatus such as an exchange of rail or sprocket are rendered needless and the work required for changing the stretching ratio can be very much simplified.

Unlike the slider in the conventional apparatus, the roller 28 yields the following benefits. First, the consumption of the lubricant to be supplied between the rail and the roller 28 can be drastically decreased as compared with the use of the slider, resulting in a remarkable reduction of lubricant splashing on the film. Also, according to a reduction of the amount of iron powder produced by running of the endless chain, the quality of a film is improved drastically. Meanwhile, a decrease of abrasion compared with the slider will prolong the life of the apparatus and cut back the expense for maintenance.

In the link member unit 3 of this example, the link members 11 and the guide-rollers 6 are arranged symmetrically with respect to the plane in which the sheet material 1 is held. And as a consequence the loads generating in any member of link member units 3 are well balanced. Accordingly there is no generation of a moment and twisting force making the running unstable and an excellent characteristic for high-speed running can be guaranteed.

However, in the case where the stretching force of the sheet material is small and high speed running is not required, it is not necessary to arrange the link members 11 and the guide-rollers 6 symmetric.

Next another embodiment of the link device for the sheet material will be described.

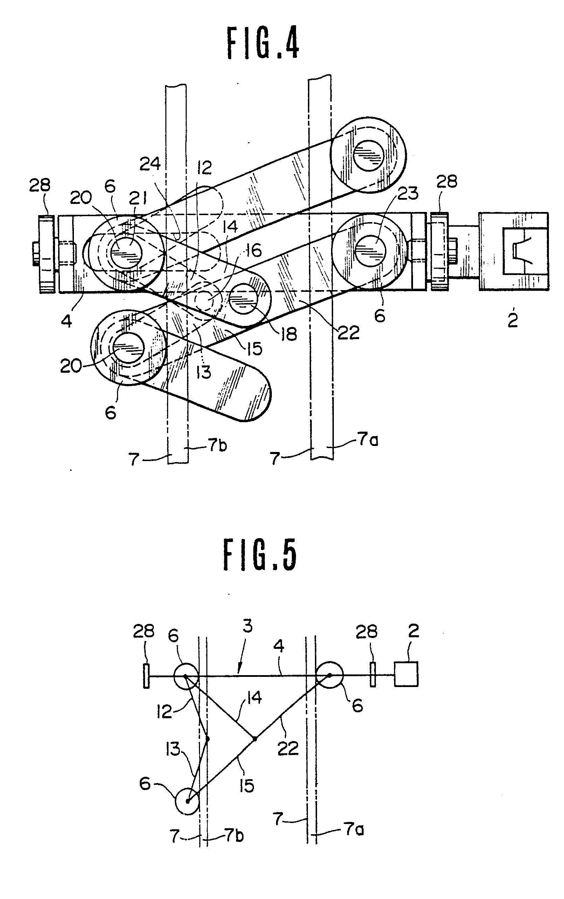

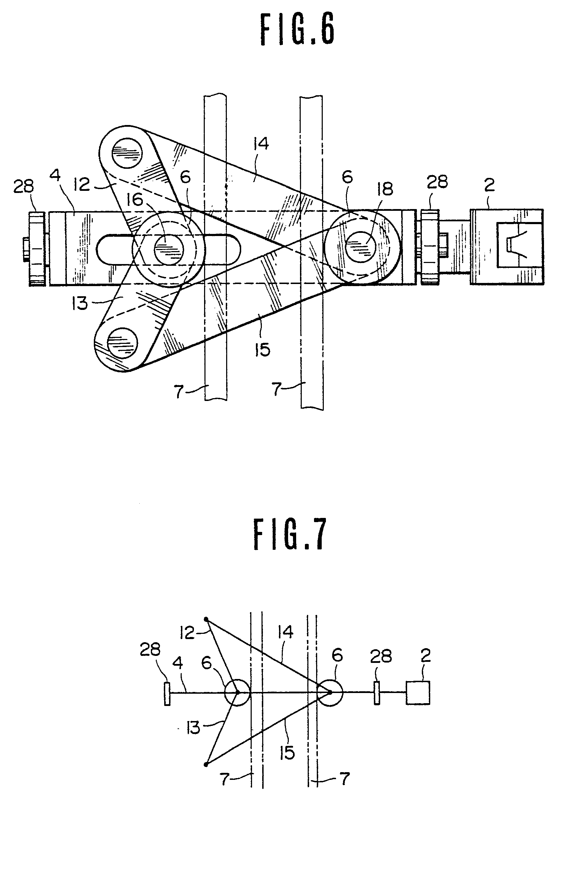

In the example illustrated in Figs. 6 and 7, the sub-link 4 lies over the junction 18 of long links 14 and 15 and the junction 16 of short links 12 and 13 in said link member unit 3.

Such a link mechanism requires a fewer number of members and yields a more simple structure than the link mechanism shown in Fig. 4.

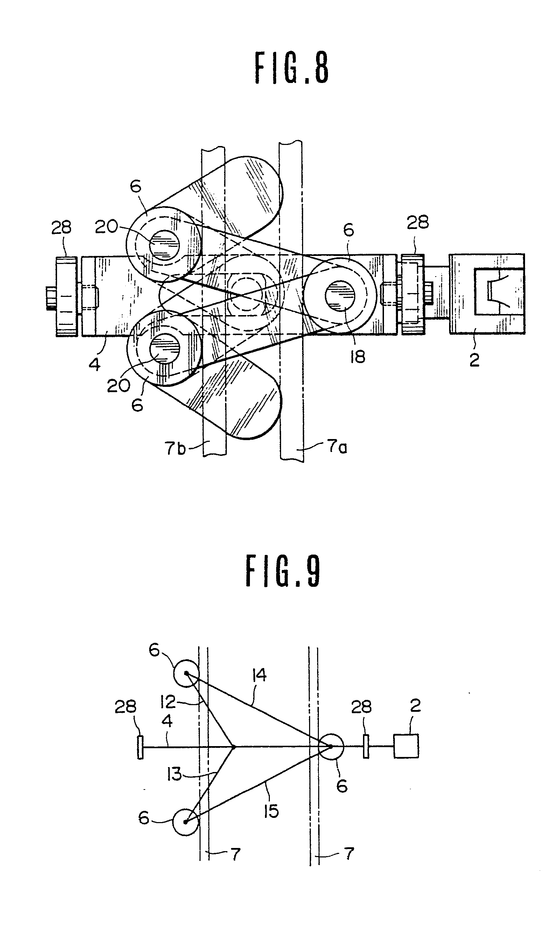

In an example illustrated in Figs. 8 and 9, unlike in Fig. 6 the guide-roller 6 is provided at the junction 18 of long links 14 and 15, at the junction 20 of long link 14 and short link 12 and at the junction 20 of long link 15 and short link 13.

Such an arrangement of the guide-rollers 6, unlike the arrangement in Fig. 6, is triangular and therefore the engagement of the guide-roller 6 with the guide-rail 7 becomes more stable and as a consequence the folding movement of the link member unit 3 becomes more stable.

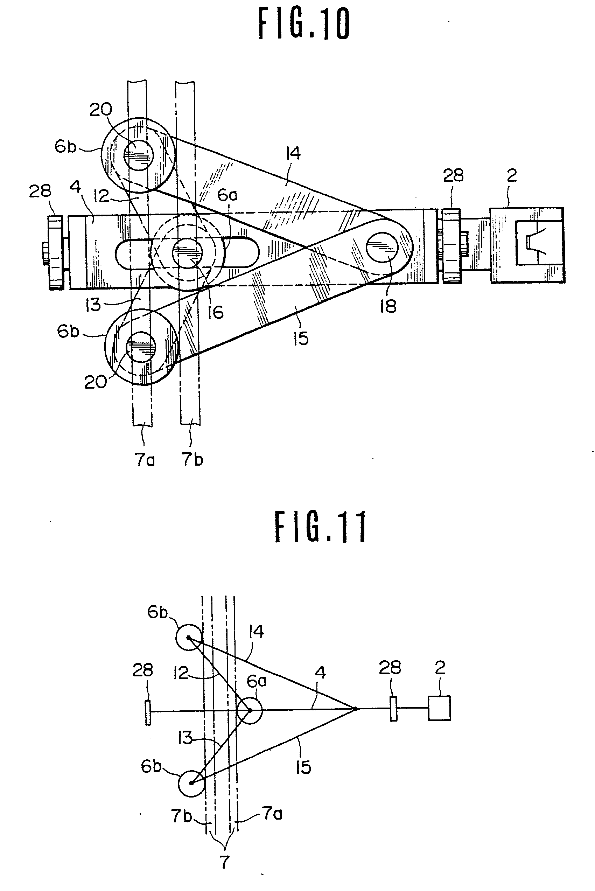

In the example illustrated in Figs. 10 and 11, the sub-link 4 lies over the junction 18 of long links 14 and 15 and the junction 16 of short links 12 and 13. The guide-roller 6 is provided each at the junction 16, at the junction 20 of long link 14 and short link 12 and at the junction 20 of long link 15 and short link 13. The guide-roller 6a at the junction 16 and the guide-roller 6b at the junction 20 are vertically staggered in position. Thus, in Fig. 10 the guide-roller 6a is disposed below the link member unit 3, while the guide-roller 6b is disposed above said unit 3. Accordingly, the guide-rail 7a engages with the guide-roller 6a below the unit 3, while the guide-rail 7b engages with the guide-roller 6b above unit 3. In this example, the long links 14, 15 and the short links 12, 13 are not arranged with the vertically symmetric formation illustrated in Fig. 3.

In the above arrangement when adjusting the gauge of the guide-rails, an interference between the guide-rails 7a and 7b can be avoided through vertical staggering of the guide-rollers 6a, 6b and of the guide-rails 7a, 7b. In this way the numbers of the guide-rollers 6, the guide-rails 7 and the link members can be decreased. Since the guide-rollers 6a and 6b are vertically staggered, the moment on the link member unit 3 in a vertical plane when the guide-rails 7a and 7b are clipped by guide-rollers 6a and 6b, can be countered by plates for preventing floating of the rollers 28.

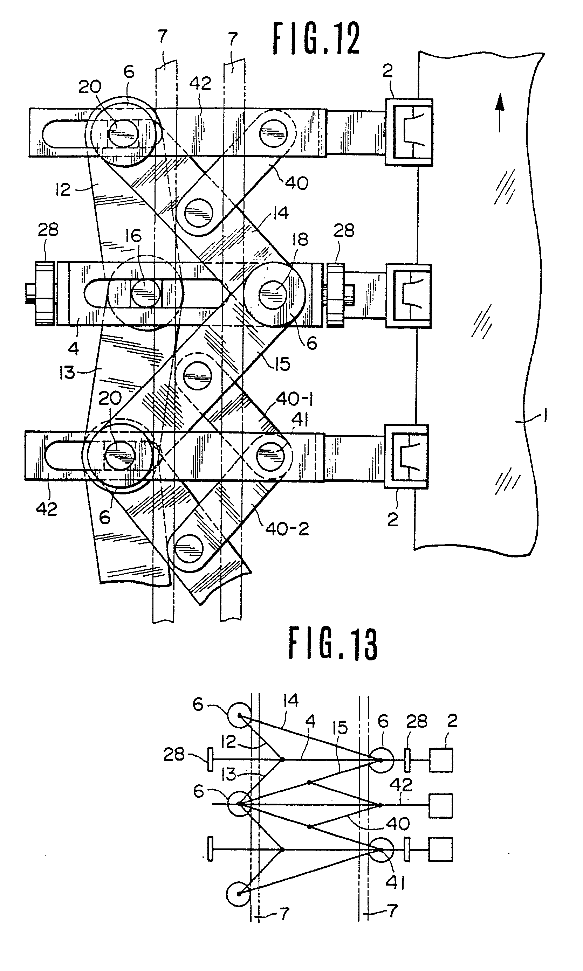

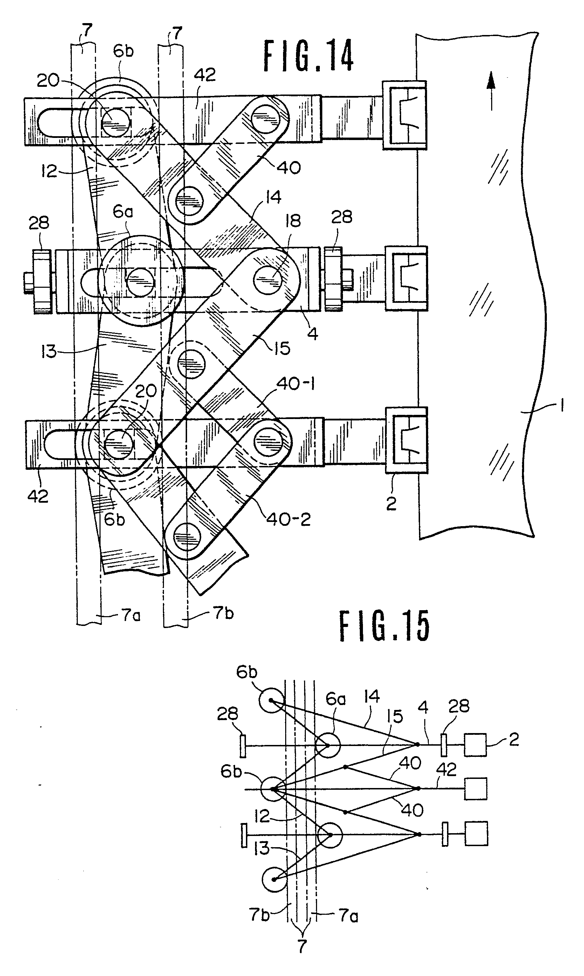

In the example of Figs. 12 and 13, an intermediate link unit is added, and a pair of intermediate links 40-1, 40-2 which are rotatably connected to each other are connected to the adjacent long links 14 and 15 of two adjacent link member units 3. In addition to the sub-link 4 provided above the link member unit 3, there is provided between sub-links 4, 4 an intermediate sub-link 42 lying over the junction 20 of the long link and short link and over the junction 41 of the link members 40-1 and 40-2 of the intermediate links 40. The guide-rollers 6 are provided at the junction 18 of long links 14 and 15 and at the junction 20 of long links 14, 15 and short links 12, 13.

In such an arrangement the pitch between the grippers 2 is shorter by introducing the intermediate sub-links 42. At the time of stretching a sheet material, particularly non-oriented film, a transverse necking is liable to occur in non-gripped edges of both sides of the film between grippers which often causes a problem in production and a deterioration in the quality of the product. In such a case it is desirable that the pitch of the grippers 2 be made shorter and in this example just this effect can be obtained. Besides, the number of guide-rollers 6 can be substantially decreased as compared with the numbers of sub-links 4, 42 and grippers 2. As a result, the running resistance of the guide-roller against the guide-rail 7 can be decreased and then the force required for driving the endless chain 5 can be decreased.

For the purpose of realizing a higher speed running, the guide-rail 7 has to be made thicker for increasing rigidity and as a consequence an increase in the length of the link member is inevitable. However, the addition of the intermediate link 40 will guarantee the rigidity of the link member unit 3, while the presence of the intermediate sub-link 42 will keep the pitch between grippers 2 short. Thus a high speed running can be realized with the rigidity of every part secured.

Figures 14 and 15 illustrate another example of adding an intermediate link. In this example the intermediate links 40 are added to the arrangement of Figs. 10 and 11. Namely, there are provided the intermediate link 40 and the intermediate sub-link 42, while the guide-rollers 6a and 6b are vertically staggered in position.

In this arrangement, the intermediate link 40 serves to guarantee the rigidity of the link member unit 3, while the intermediate sub-link 42 keeps the pitch between grippers 2 short. At the same time the numbers of guide-rollers 6, guide-rails 7 and link members can be reduced as compared with their numbers in the example of Figs. 12 and 13.

Next the fitting position of the gripper 2 will be explained.

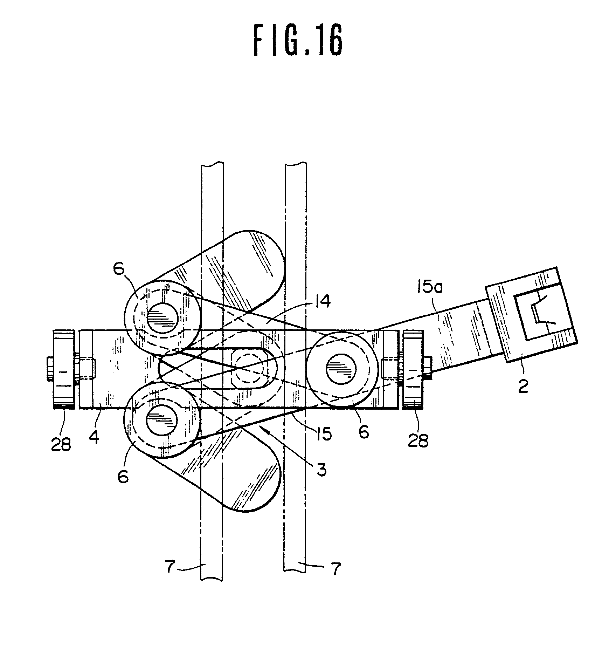

In all of the above examples the gripper 2 is attached to the sub-link 4 or the intermediate sub-link 42. As illustrated in Fig. 16, however, the gripper 2 may be fitted to the link member unit 3. In the example of Fig. 16, the gripper 2 is fitted to the end of the extended portion 15a of one long link 15. The direction of the gripper 2 fitted to the long link 15 will change depending on the folding movement of the link member unit 3. For a sheet material whose stretching is virtually unaffected by change of the direction of the gripper 2, application of such an arrangement will be allowed. In the present example, if the sub-link 4 is a laterally extending U-shaped member, an interference will occur between the extended portion 15a and the sub-link 4 and to prevent the interference the affected part of the sub-link 4 is split into upper and lower members.

Next, the connection system of the sub-link 4 will be explained.

In all of the examples shown in Figs. 6 to 16 the connection of the sub-link 4 on the side of long links 14, 15 is constructed such that only rotational movement is allowed, while the connection on the opposite side is made slidable in a long slot 24. The connection system is not limited to this embodiment, namely it is possible to make the connection on the side of long links 14, 15 slidable and to make the connection on the opposite side rotatable. In the latter case, the stretch tension transmitted from the gripper 2 will be given to the link member unit 3 via the rotatable connection on the opposite side to the gripper 2. As a result the stretch tension will be more likely to be borne by the guide-roller 6 and the guide-rail 7 on the opposite side to the gripper 2, and this will bring about the advantage of realizing stable stretching.

Next, the arrangement of the roller 28 will be explained.

As illustrated in Figs. 12 and 14, the roller 28, depending on the condition, need not be provided at every sub-link. For instance, according to the force acting on each roller 28, the rollers 28 may be arranged at an interval of every other sub-link 4 or at a longer interval.

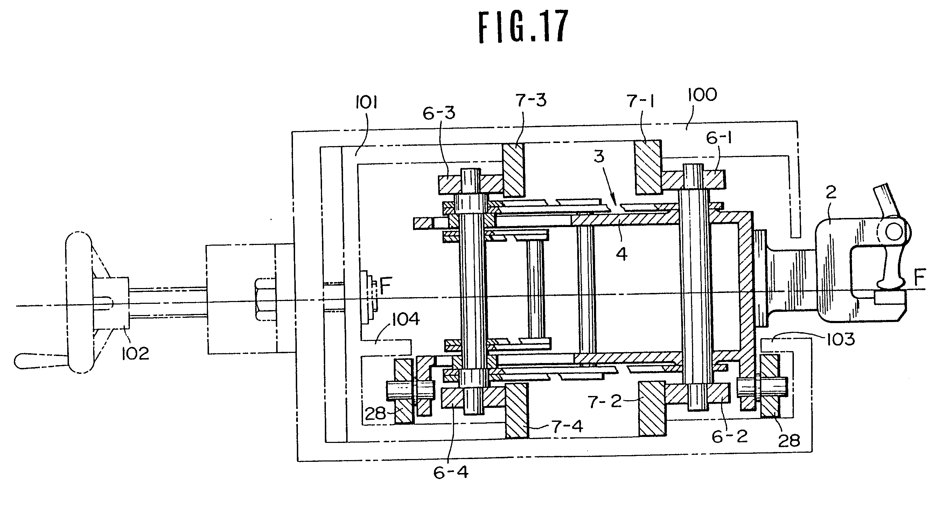

Figure 3 is an example of rollers 28 being arranged in vertical symmetry. As shown in Fig. 17, however, the rollers 28 may be provided only below the sub-link 4. In that case it would be desirable to provide the roller stoppers 103, 104 extending over the roller. Then the vertical movement of the rollers 28 would be constrained and a dancing of the link member unit 3 in running as well as its rotational movement under action of a moment would be prevented. Thus even if the roller 28 exists only below the sub-link 4, a smooth running with a low resistance will be guaranteed.

Next, a typical pattern of stretching in the stretching apparatus according to the present invention will now be illustrated.

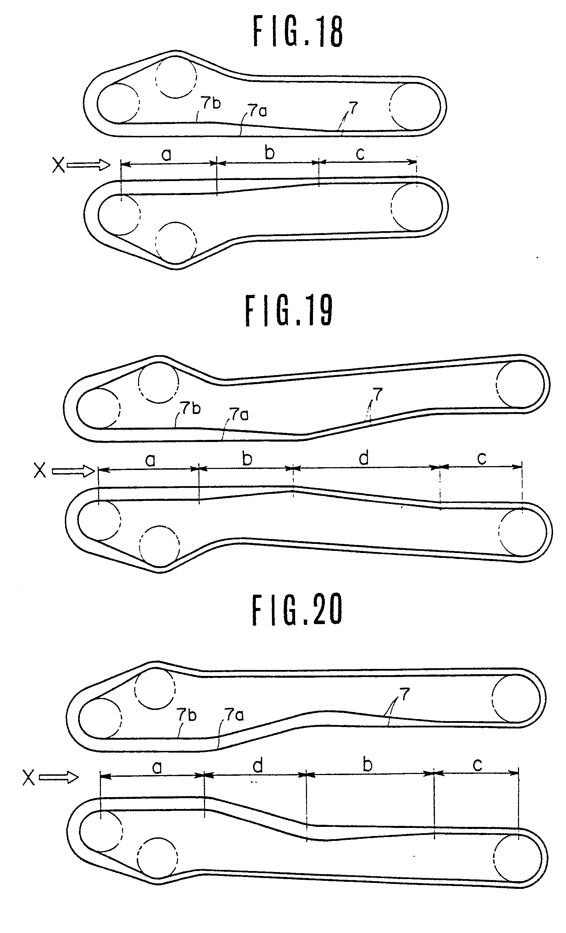

Figure 1 shows an example in the case where the sheet material 1 is biaxially stretched at the same time. Figures 18, 19 and 20 show examples of a guide-rail arrangement for other typical patterns of stretching.

Figure 18 is a case of the sheet material being stretched only in the longitudinal direction. In this case a pair of guide-rails 7 provided on both transverse sides of the sheet material are arranged parallel to the running direction X of the sheet material. The gauge between the guide-rails 7a and 7b in the pair of guide-rails 7 is adjusted to be parallel in section a, is gradually made narrower in section b and is again parallel in section c. Therefore, in section b the angle of folding of the link member unit 3 gradually changes, the pitch of grippers 2 gradually increases and thus the sheet material is stretched in the longitudinal direction. The section a is a pre-heating zone and the section c is a heatset zone or a cooling zone.

In this way, the stretching apparatus according to the present invention is available as a longitudinal stretching machine for stretching the sheet material in the longitudinal direction alone. Usually for the purpose of improving the surface property of the sheet material such as a film, the surface of material is subjected to coating or laminating with another film. A typical system for longitudinal stretching is a multi-roll system utilizing the peripheral speed difference between rolls. When the coat or the composite layer is composed of a low-melting point material, the low-melting point material in contact with the surface of the rolls which can also pre-heat the sheet material becomes melted and sticks to the rolls, thereby resulting in failing to be stretched. In the system illustrated in Fig. 18 which can perform noncontact heating of the material, there is no sticking problem as exists in the roll system and accordingly it is possible to make a longitudinal stretching of the sheet material coated with a low-melting point material, unlike in the roll system.

Figure 19 is an example of stretching a sheet material in the longitudinal direction and then in the transverse direction. In this case a pair of guide-rails 7 disposed on both sides of the sheet material in the transverse direction are arranged parallel to the running direction X of said material in sections a and b, but in section d these rails are gradually spread out, and again in section c they become parallel. The gauge between the guide-rails 7a and 7b is adjusted to be gradually narrower in section b and to be parallel in sections a, d and c. Thus the sheet material is preheated in section a, stretched in the longitudinal direction in section b, stretched in the transverse direction in section d and heat-set or cooled in section c. In the conventional biaxial successive stretching system for stretching the sheet material in the longitudinal direction and then in the transverse direction, separate stretching machines units are usually arranged in series. According to the present invention, as seen in Fig. 19, biaxial successive stretching can be performed easily within a single device.

Figure 20 is an example of stretching the sheet material in the transverse direction and then in the longitudinal direction. A pair of guide-rails 7 are, in section a, arranged parallel to the running direction X of the sheet material, spread out in section d, and parallel again in sections b and c. The gauge between the guide-rails 7a and 7b is adjusted to be gradually narrower in section b and parallel in the other sections a, d and c. Thus the sheet material is preheated in section a, stretched in the transverse direction in section d, stretched in the longitudinal direction in section b and thermoset or cooled in section c. Thus, unlike the case of Fig. 19, the procedure for stretching in the longitudinal and transverse directions can be reversed.

Figures 1, 18, 19 and 20 illustrate typical stretching patterns, but the present invention is not limited to these patterns. For instance, when longitudinal stretching after biaxial stretching is demanded to improve the mechanical properties in the longitudinal direction in the recent needs of a film as a video and audio tape, the demand can be easily satisfied by adjusting the gauge between the guide-rails 7a and 7b gradually narrow in section c in Figs. 19 and 20. It is apparent that the present invention can also satisfy the demand, when transverse stretching after biaxial stretching is demanded. Further the present invention could realize a two-step stretching such as additional longitudinal stretching after longitudinal stretching or additional transverse stretching after transverse stretching. Thus the present invention can be adapted to whatever stretching sequence required from production needs.

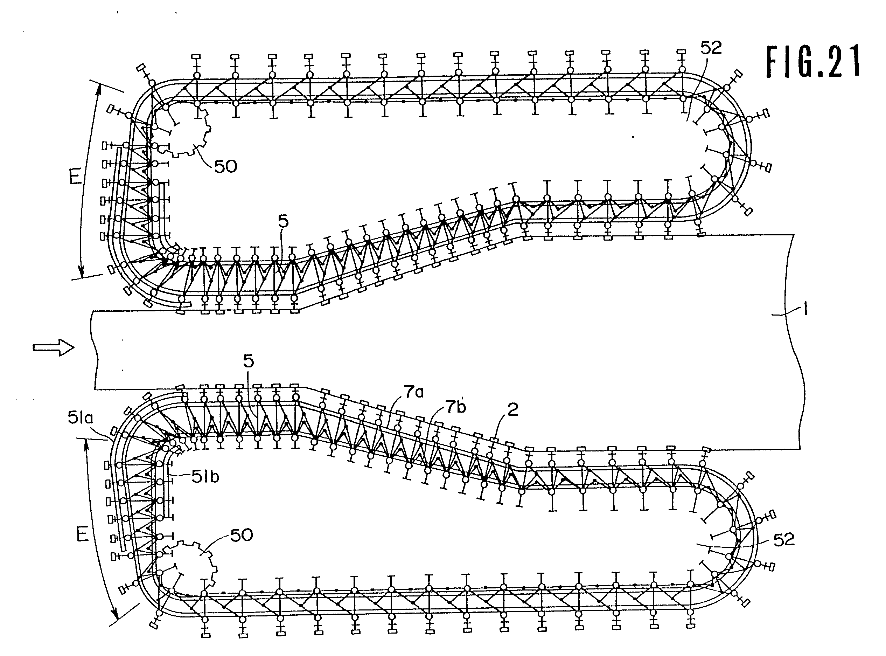

Figure 21 illustrates a different embodiment of the drive mechanism for the endless chain link 5 from that given in Fig. 1. In this embodiment there is one drive sprocket 50 for engaging each endless chain 5. The drive sprocket 50 is located at the position where the decreasing pitch section E begins. In this section E, the gauge between the guide-rails 7a and 7b is gradually increased, while the pitch of grippers 2 is gradually decreased. In this section E, the guide-rails 51a, 51b to guide the guide-roller 6 are provided as well as the guide-rails 7a and 7b.

According to the present invention, in which the provision of roller 28 at sub-link 4 results in reducing the total running resistance of the endless chain 5, each endless chain 5 can be easily driven by only one drive sprocket 50. When the stretching machine is small and the load is light, the drive sprocket 50 may be located at the exit 52. In that case, the link member unit 3 will be pulled in the running direction on the decreasing pitch section E and therefore the guide-rails 51a, 51b can be removed. If necessary, in addition to the drive sprocket 50, an auxiliary sprocket may be provided at each turning point of the endless chain 5.

Next, the intersecting angle between short links in the decreasing pitch section will be described. To reduce the running resistance of the endless chain 5, it is desirable as shown in Fig. 1 that the resistance between the roller 6 and the guide-rail 7 be made small by expanding the short links 12, 13 to the limit in section D of the return side. For this reason, however, the short links 12, 13 have to be folded on the reduced pitch section E so that the pitch of grippers 2 may be decreased.

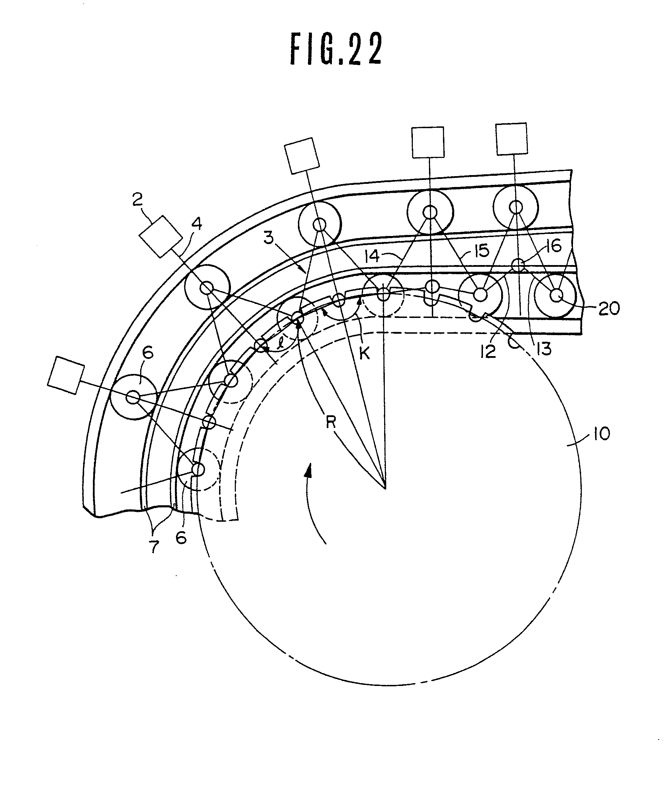

Since the short links 12, 13 expanded to the limit will be an obstruction, infinite force is required to fold the short links 12, 13 by engaging of the guide-roller 6 with the guide-rail 7. For this reason it is arranged as in Fig. 1 that a sprocket 10 is provided at the position where the decreasing pitch section E begins, and, after the intersecting angle between the short links 12, 13 is made less than 180° by engaging with said sprocket 10, the pitch of grippers is decreased. Thus as indicated in Fig. 22, the intersecting angle K between the short links 12 and 13 can be obtained by making the link member junctions 16, 20 engage the sprocket 10. The angle K thus set is determined by

$$K=2\times\cos^{-1}(l/2R),$$

where R is the radius of pitch circle of the sprocket 10, and l is the length of short links 12, 13. In order to obtain the smaller intersection angle K for the purpose of facilitating the reduction of the pitch of grippers 2 in the decreasing pitch section E, the method available will be to make the value of l larger or the value of R smaller in the above formula. There is, however, a limitation to the increase in the value of l, because an increased l will mean an increased pitch of grippers 2, and resulting in necking and uneven stretching of the sheet material.

On the contrary, decreasing the radius of the sprocket 10 will mean increasing unsteadiness of acceleration due to the rotational radius of the link device about the center of the sprocket being small and thereby a smooth running at high speed can not be expected. In addition, the heavy abrasion of the roller 28 caused by the unsteadiness of the acceleration of the roller 28 which supports the link device makes the maintenance troublesome and the high speed running very difficult.

Some examples making the intersecting angle K between short links small without increasing the length of the short links 12, 13 and decreasing the radius of the sprocket 10 will be illustrated below.

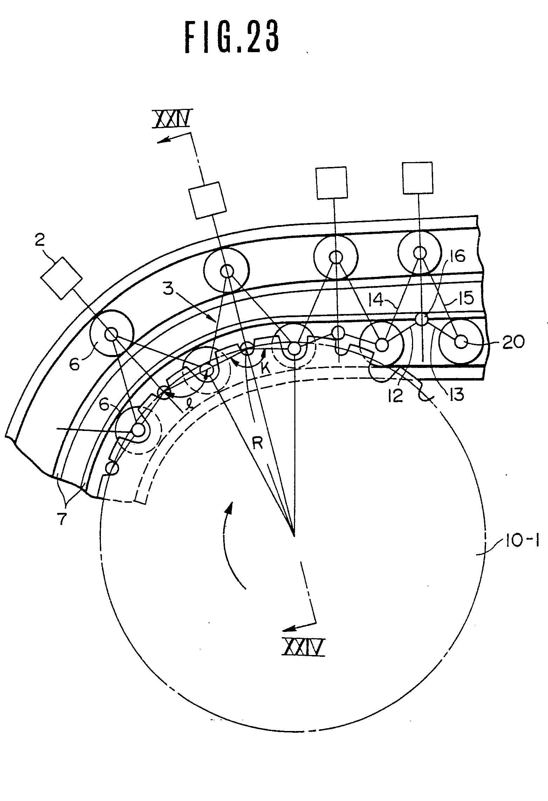

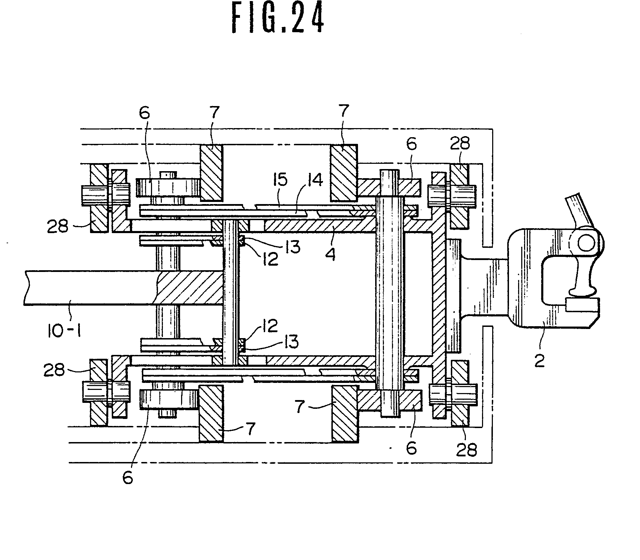

In the example shown in Fig. 23, the sprocket 10-1 provided at the position where the reduced pitch section E following the longest gripper pitch section D begins engages with every junction 16 of the link member unit 3. Namely, the sprocket 10-1 does not mesh with the junction 20 of short links 12, 13 and long links 14, 15 but with the junction 16 of short link 12 and short link 13. As indicated in Fig. 24, the sprocket 10-1 engages with the link member unit 3 at the midway of the link member unit 3 in the vertical direction thereof.

As illustrated in Fig. 23, the short link 12 and the short link 13 of the adjacent link member units 3 are forcibly positioned in a straight row while the sprocket 10 meshes with the link member unit. Thus the intersecting angle K between the short link 12 and the short link 13 in the link member units 3 is determined by mhe formula

$$K=2\times\cos^{-1}(l/R).$$

According to the above formula for this arrangement, sprocket 10-1 with the radius two times the radius of the sprocket in the case of Fig. 22 can be employed to get the same value of K as obtained in the case of Fig. 22. Since the value of K can be made small with the radius of sprocket kept larger than necessary value, the reduction of the pitch of grippers can be easily accomplished at the same time with attainment of high-speed performance.

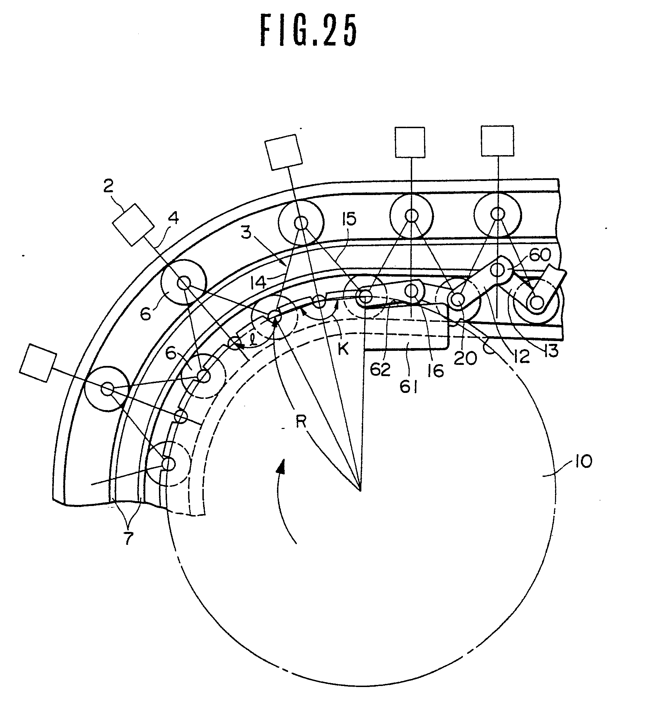

In the example of Fig. 25, the short link has a prominent portion 60 protruding in the opposite direction to the side of long links 14, 15, and at the position where the decreasing pitch section E begins, a guide plate 61 is provided. The guide plate 61 engages with the prominent portion 60 and moves the junction 16 of short links 12 and 13 to the side of long links 14, 15.

In this example, wherein the engaging face 62 of the guide plate 61 is linearly inclined as shown in Fig. 25, the prominent portion 60 can smoothly slide on the face 62. And at the end of the face 62, the angle K between short links 12, 13 is forcibly reduced to a desired value and thus the subsequent reduction of the pitch of grippers 2 is facilitated. The face 62 may be non-linear, or smoothly curvilinear.

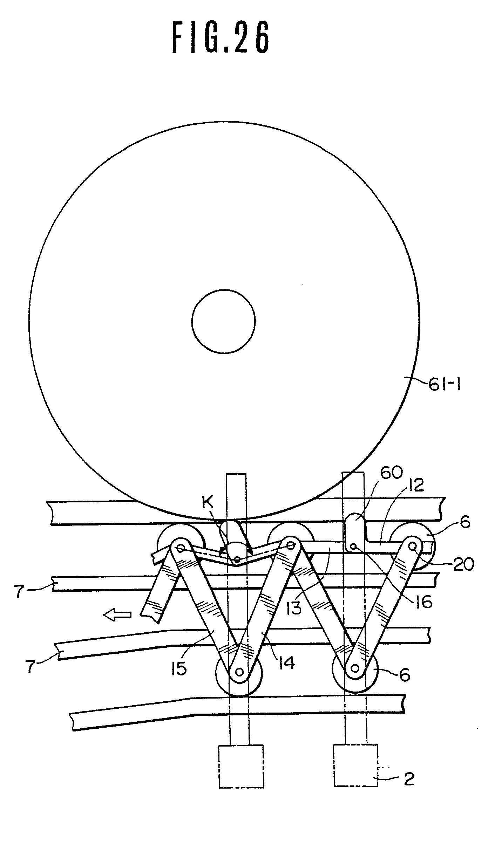

If the guide plate 61 in Fig. 25 is a rotatable disk 61-1 in Fig. 26, the relative slipping between the rotatable disk 61-1 and the prominent portion 60 will become very small, assuring a smoother engagement. The engaging piece 61 or the rotatable disk 61-1 may be located at any position in the decreasing pitch section E. The guide plate 61 or the rotatable disk 61-1 is desired to be designed so that the angle K becomes less than 170° to facilitate the subsequent reduction of pitch of grippers 2.

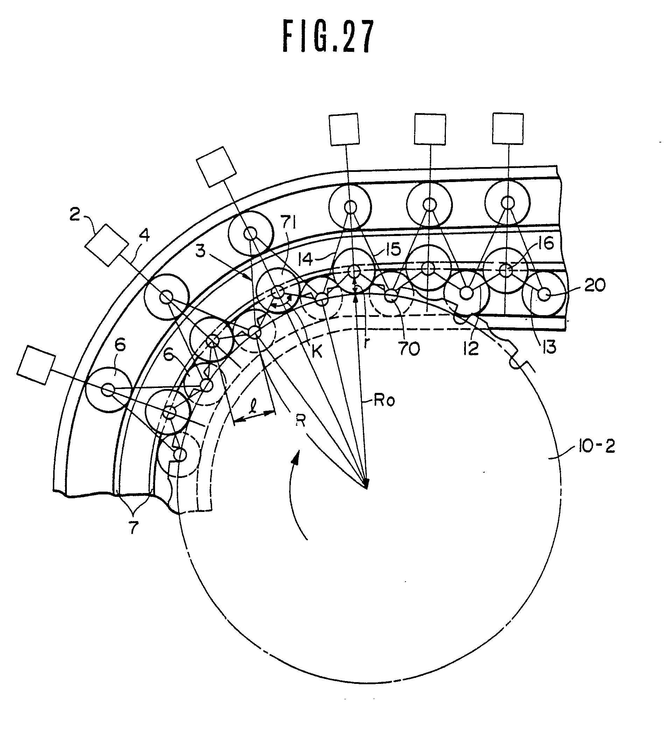

In the example of Fig. 27, at the junction 16 of short links 12 and 13 there is provided an engaging piece 71 which engages with the sprocket 10-2 and has a larger radius than that of the engaging piece 70 provided at the junction which connects the adjacent link member units 3.

In this example the distance between the center of sprocket and the junction 16 becomes Ro+r, where Ro is the root circle radius on the tooth surface of the sprocket 10-2 which engages with the engaging piece 71 and r is the radius of the engaging piece 71.

In contrast, the distance between the center of the sprocket and the junction 20 is equal to R, i.e. the pitch circle radius of the sprocket 10-2. Accordingly the angle K becomes small according to the amount of Ro+r−R which represents the distance between the junction 16 and junction 20 in the radial direction. As a consequence even after the sprocket 10-2 releases the link members unit 3, the pitch of grippers 2 is easily decreased, and high-speed running can be obtained by making the radius of the sprocket large.

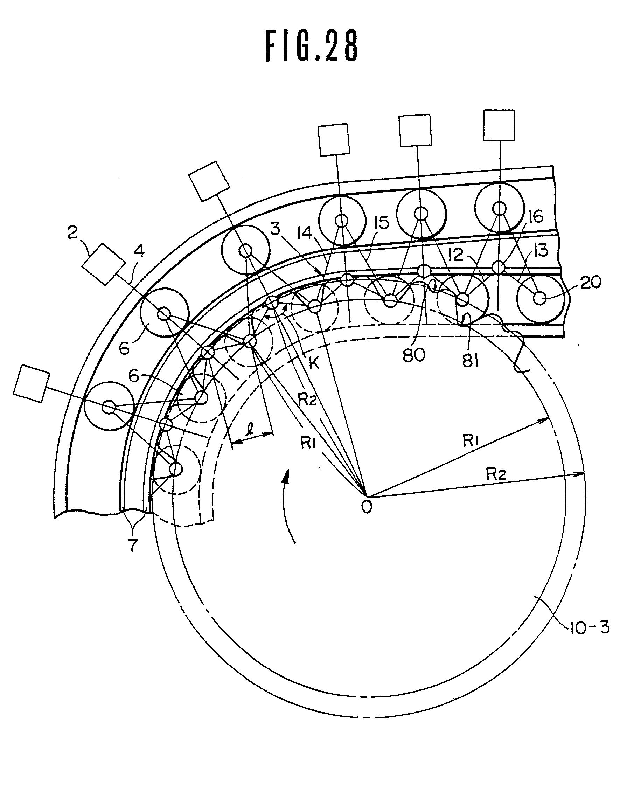

In the example of Fig. 28 the pitch circle radius on the tooth surface of the sprocket 10-3 is made alternately large and small. Thus, the pitch circle diameter $R_2$ on the tooth surface 80 which engages with the junction 16 to connect short link 12 and short link 13 is made larger than the pitch circle radius $R_1$ on the tooth surface 81 which engages with the junction 20 connecting the adjacent link member units 3.

In this example the angle K between short links 12 and 13 is given by

$$K=2\cos^{-1}((l^2+R_2^2-R_1^2)/(2R_2\times l)).$$

When $R_1=R_2$, the state of Fig. 22 is generated. The larger the value of $R_2/R_1$ is, the smaller will be the angle K. Therefore when $R_2/R_1$ is appropriately set, a desired value of K will be obtained, thereby facilitating decreasing of pitch of grippers 2.

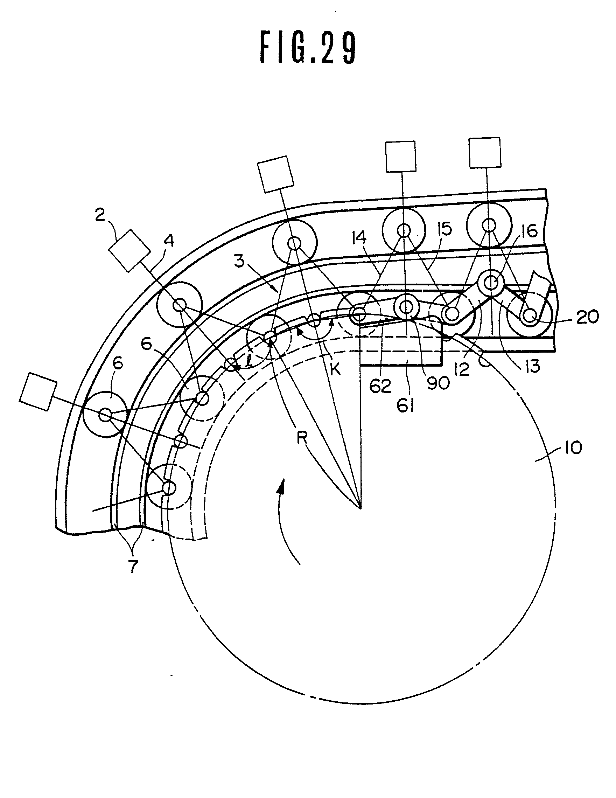

In the example of Fig. 29, a ring 90 is provided at the junction 16 of short link 12 and short link 13, while at the position where the decreasing pitch section E begins a guide-plate 61 which engages with said ring 90 and shifts the junction 16 to the side of long links 14, 15 is provided.

In this example the ring 90 moves along the guide surface 62 of the guide-plate 61 and at the end of the guide surface 62 the angle K between short link 12 and short link 13 is forcibly reduced to a required value.

As a result the subsequent reduction of the pitch of the grippers is facilitated.

If the ring 90 is rotatably held, a smoother reduction of the angle K will be possible. And if the guide surface 62 is curvilinear, a smoother engagement will be possible. As the guide-plate 61, a rotatable disk may be employed.

**Claims**

1. A link device for stretching a sheet material (1) constituting an endless chain (5) which represents a loop of link member units (3) made up of a plurality of link members (11) including short links (12, 13) and long links (14, 15) pivoted in a pantograph manner with links of the same length being arranged adjacently in the running direction of the endless chain (5), sub-links (4), each held substantially at a right angle to the said running direction with a pivot of the link member unit (3) constrained to move longitudinally along the sub-link (4), grippers (2) to hold the side edge of the sheet material (1), and guide rollers (6) engaging guide rails (7) located in such a way as to provide the desired stretching ratio of the sheet material (1) in the longitudinal and transverse directions characterised in that the link member units (3) are supported by lines of rollers (28), each roller (28) being pivotally mounted on a fixed part of a sub-link (4) so that the paths traversed by the lines of rollers (28) have a substantially constant gauge between them.

2. A link device according to claim 1, wherein said sub-link (4) lies across the junction (18) of long links (14) and (15) and the junction (16) of short links (12) and (13) in said link member unit (3), and said guide-roller (6) is provided each at the junction (18) of long links (14) and (15) and at the junction (16) of short links (12) and (13).

3. A link device according to claim 1, wherein said sub-link (4) lies across the junction (18) of long links (14) and (15) and the junction (16) of short links (12) and (13) in said link member unit (3), and said guide-roller (6) is provided each at the junction (18) of long links (14) and (15) and at the junction (20) of long link (14, 15) and short link (12, 13).

4. A link device according to claim 1, wherein said sub-link (4) lies across the junction (18) of long links (14) and (15) and the junction (16) of short links (12) and (13) in said link member unit (3), said guide-roller (6) is provided each at the junction (16) of short links (12) and (13) and at the junction (20) of long link (14, 15) and short link (12, 13), and thereby the guide-roller (6) at the junction (16) of short links (12) and (13) is vertically staggered in position from the guide-roller (6) at the junction (20) of long link (14, 15) and short link (12, 13).

5. A link device according to claim 1, wherein said sub-link (4) lies across the junction (20) of long link (14, 15) and short link (12, 13) in said link member unit (3) and an extended portion (22) of one long link (15) on the side of said junction (18) of long links (14) and (15), and said guide-roller (6) is provided each at the junction (20) of long link (14, 15) and short link (12, 13) and at the junction (23) of said sub-link (4) and said extended portion (22) of said long link (15).

6. A link device according to claim 1, wherein intermediate links (40) constituted by a pair of link members connected rotatably are provided between adjacent long links (14, 15) of adjacent link member units (3), said sub-link (4) lies across the junction (18) of long link (14) and long link (15) and the junction (16) of short link (12) and short link (13) in the link member unit (3) while an intermediate sub-link (42) held substantially at a right angle to the running direction of said link member unit lies across the junction (20) of long link (14, 15) and short link (12, 13) and the junction (41) of said pair of link members of said intermediate links (40), and said guide-roller (6) is provided at the junction (18) of long links (14) and (15) and at the junction (20) of long link (14, 15) and short link (12, 13).

7. A link device according to claim 1, wherein intermediate links (40) constituted by a pair of link members connected rotatably are provided between adjacent long links (14, 15) of adjacent link member units (3), said sub-link (4) lies over the junction (18) of long links (14) and (15) and the junction (16) of short links (12) and (13) in the link member unit (3) while an intermediate sub-link (42) held substantially at a right angle to the running direction of said link member unit lies across the junction (20) of long link (14, 15) and short link (12, 13) and the junction (41) of said pair of link members of said intermediate links (40), said guide-roller (6) is provided each at the junction (20) of long link (14, 15) and short link (12, 13) and the junction (16) of short links (12) and (13), and said guide-roller (6) at the junction (16) of short links (12) and (13) is vertically staggered in position to said guide-roller (6) at the junction (20) of long link (14, 15) and short link (12, 13).

8. A link device according to any preceding claim, wherein said sub-link (4) is supported by said link member unit (3) on the long link (14, 15) side and the short link (12, 13) side in the cross section normal to the running direction of the link member unit (3), the support on the long link (14, 15) side being rotatable only and the support on the short link (12, 13) side being slidable.

9. A link device according to any one of claims 1 to 7, wherein said sub-link (4) is supported by the link member unit (3) on the long link (14, 15) side and on the short link (12, 13) side in the cross section normal to the running direction of said link member unit (3), the support on the short link (12, 13) side being rotatable only and the support on the long link (14, 15) side being slidable.

10. A link device according to any preceding claim, wherein a group of guide-rollers (6) are provided in said link member unit (3).

11. A link device according to claim 10, wherein the four fold link members (11) constituting said link member unit (3) and said guide-rollers (6) are provided in pairs vertically symmetric in position with respect to the plane in which the sheet material is held by said gripper.

12. A link device according to any preceding claim, wherein a group of rollers (28) is provided in said link member unit (3).

13. A link device according to claim 12, wherein said rollers (28) are provided to project both above and below said sub-link (4).

14. A link device according to claim 12, wherein said rollers (28) are provided to project only below said sub-link (4).

15. A link device according to any preceding claim wherein the guide rails (7) comprise a pair of loop endless rails (7a, 7b).

16. A link device according to claim 15 wherein said pair of guide rails are connected to a gauge adjuster to adjust the gauge between the rails (7a, 7b) depending on the stretching ratio of the sheet material (1) to be stretched.

17. A stretching apparatus for a sheet material (1) including a pair of link devices according to any preceding claim provided on each side of the sheet material (1) to be stretched, the guide rails (7) in each link device comprising a pair of rails (7a, 7b).

18. A stretching apparatus according to claim 17 wherein said pair of guide rails laid on both sides of the sheet material (1) to be stretched are set parallel to the running direction of said sheet material (1) and the gauge between the guide-rails (7a, 7b) in each pair is so adjusted as to allow said sheet material (1) to be stretched in the longitudinal direction alone.

19. A stretching apparatus according to claim 17 wherein there are provided a first stretching section in which said pair of guide rails lie in parallel formation and the gauge between the guide rails (7a, 7b) in each pair is gradually decreased in the running direction of the sheet material (1) and a second stretching section in which the distance between said pair of guide rails diverges in the running direction of the sheet material (1) and the gauge between the guide rails (7a, 7b) in each pair is kept constant so that the sheet material (1) is stretched in the longitudinal direction in said first stretching section and then stretched in the transverse direction in sa d second stretching section.

20. A stretching apparatus according to claim 17 wherein there are provided a first stretching section in which said pair of guide rails diverges in the running direction of the sheet material (1) and the gauge between the guide-rails (7a, 7b) in each pair is kept constant, and a second stretching section in which said pair of guide rails lie in parallel formation and the gauge between the guide-rails (7a, 7b) of each pair is gradually decreased in the running direction of the sheet material so that the sheet material (1) is stretched in the transverse direction in said first stretching section and then stretched in the longitudinal direction in said second stretching section.

21. A stretching apparatus according to claim 17 wherein there is provided a stretching section in which said pair of guide rails diverge in the running direction of the sheet material (1) and the gauge between the guide-rails (7a, 7b) in each pair is gradually decreased in the running direction of the sheet material (1) so that the sheet material (1) is stretched at the same time in both longitudinal and transverse directions.

22. A stretching apparatus according to any one of claims 17 to 21 wherein each of the endless chains (5) provided on both sides of the sheet material (1) to be stretched can be driven by one drive sprocket (50) at the start position of a decreasing pitch section (E) where the pitch of grippers (2) is decreased by folding movement of the link member units (3) of said endless chain (5).

23. A stretching apparatus according to any one of claims 17 to 21 wherein a sprocket (10-1) which meshes not with the junction (20) of short link (12, 13) and long link (14, 15) but with the junction (16) of short link (12) and short link (13) is provided at the start position of a decreasing pitch section (E) which comes after a gripper pitch section (D) where the pitch of the grippers (2) in the endless chain (5) is the longest.

24. A stretching apparatus according to any one of claims 17 to 21 wherein a prominent portion (60) protruding on the opposite side to the long link (14, 15) side is provided on a short link (12, 13) of each link member unit (3), and a guide plate (61) which engages said prominent portion (60) and moves the junction (16) of short links (12 and (13) to the side of long link (14, 15) is provided at the start position of a decreasing pitch section (E) following a gripper pitch section (D) where the pitch of grippers (2) in the endless chain (5) is the longest.

25. A stretching apparatus according to any one of claims 17 to 21 wherein at the junction (16) of short links (12) and (13) in said link member unit (3) is provided a guide plate (71) which engages a sprocket (10-2) provided at the start position of a decreasing pitch section (E) following a gripper pitch section (D) where the pitch of the grippers (2) of the endless chain (5) is the longest, the radius of the plate (71) being larger than that of another guide plate (70) which engages said sprocket (10-2) provided at the junction (20) of short links (12) and (13).

26. A stretching apparatus according to any one of claims 17 to 21 wherein a sprocket (10-3) to engage with said link member unit (3) is provided at the start position of a decreasing pitch section (E) following a gripper pitch section (D) where the pitch of the grippers of the endless chain (5) is the longest, and the pitch circle radius ($R_2$) on the

tooth surface (80) of said sprocket (10-3) which meshes with said link member unit at the junction (16) of short links (12) and (13) in said link member unit (3) is larger than the pitch circle radius (R₁) on the tooth surface (81) of said sprocket which meshes with said link member unit at the junction (20) of long links (14, 15) and short links (12, 13).

27. A stretching apparatus according to any one of claims 17 to 21 wherein a ring (90) is provided at the junction (16) of short link (12) and short link (13) in each said link member unit (3) and at the start position of a decreasing pitch section (E) following a gripper pitch section (D) where the pitch of the grippers (2) of the endless chain (5) is the longest, a guide-plate (61) to engage said ring (90) and to move the junction (16) of short links (12) and (13) to the side of long links (14, 15) is provided.

**Patentansprüche**

1. Kettengliedvorrichtung für die Streckung von Folienmaterial (1), die eine Endloskette (5) bildet, die eine Schleife von aus einer Vielzahl von Gliedern (11) bestehenden Gliedereinheiten (3) darstellt, die kurze Glieder (12, 13) und lange Glieder (14, 15), die in Pantograph-Art mit Gliedern gliecher Länge, die in Laufrichtung der Endloskette (5) benachbart angeordnet sind, gelenkig verbunden sind, Unterglieder (4), die jeweils im wesentlichen im rechten Winkel zur Laufrichtung gehalten sind und einen Schwenkpunkt der Gelenkeinheit (3) aufweisen, der zu einer Bewegung längs des Untergliedes (4) gezwungen ist, Greifelemente (2), um den seitlichen Rand des Folienmaterials (1) zu halten, sowie Führungsrollen (6) aufweisen, die mit Führungsschienen (7), die derart angeordnet sind, daß sie das gewünschte Streckverhältnis des Folienmaterials (1) in Längs- und Querrichtung bilden, in Eingriff stehen, dadurch gekennzeichnet, daß die Gliedereinheiten (3) mittels Reihen von Rollen (28) gelagert sind, wobei jede Rolle (28) derart drehbar an einem festen Teil eines Untergliedes (4) befestigt ist, daß die Strecken, die von den Reihen von Rollen (28) durchlaufen werden, eine im wesentlichen konstante Spurweite zwischen ihnen aufweisen.

2. Kettengliedvorrichtung nach Anspruch 1, dadurch gekennzeichnet, daß das Unterglied (4) durch die Verbindung (18) der langen Glieder (14) und (15) und die Verbindung (16) der kurzen Glieder (12) und (13) in der Gliedereinheit (3) verläuft und daß die Führungsrolle (6) jeweils an der Verbindung (18) der langen Glieder (14) und (15) und der Verbindung (16) der kurzen Glieder (12) und (13) vorgesehen ist.

3. Kettengliedvorrichtung nach Anspruch 1, dadurch gekennzeichnet, daß das Unterglied (4) durch die Verbindung (18) der langen Glieder (14) und (15) und die Verbindung (16) der kurzen Glieder (12) und (13) in der Gelenkeinheit (3) verläuft und daß die Führungsrolle (6) jeweils an der Verbindung (18) des langen Glieder (14) und (15) und der Verbindung (18) der langen Glieder (14) und (15) und der Verbindung (20) des langen Gliedes (14, 15) und des kurzen Gliedes (12, 13) vorgesehen ist.

4. Kettengliedvorrichtung nach Anspruch 1, dadurch gekennzeichnet, daß das Unterglied (4) durch die Verbindung (18) der langen Glieder (14) und (15) und die Verbindung (16) der kurzen Glieder (12) und (13) in der Gliedereinheit (3) verläuft, daß die Führungsrolle (6) jeweils an der Verbindung (16) der kurzen Glieder (12) und (13) und der Verbindung (20) des langes Gliedes (14, 15) und des kurzen Gliedes (12, 13) vorgesehen ist und daß dadurch die Führungsrolle (6) an der Verbindung (16) der kurzen Glieder (12) und (13) in vertikal versetzter Position zu der Führungsrolle (6) an der Verbindung (20) des langen Gliedes (14, 15) und des kurzen Gliedes (12, 13) angeordnet ist.

5. Kettengliedvorrichtung nach Anspruch 1, dadurch gekennzeichnet, daß das Unterglied (4) durch die Verbindung (20) des langen Gliedes (14, 15) und des kurzen Gliedes (12, 13) in der Gliedereinheit (3) und einem verlängerten Abschnitt (22) eines langen Gliedes (15) auf der Seite der Verbindung (18) der langen Glieder (14) und (15) verläuft und daß die Führungsrolle (6) jeweils an der Verbindung (20) des langen Gliedes (14, 15) und des kurzen Gliedes (12, 13) und an der Verbindung (23) des Untergliedes (4) und des verlängerten Abschnittes (22) des langen Gliedes (15) angeordnet ist.

6. Kettengliedvorrichtung nach Anspruch 1, dadurch gekennzeichnet, daß Mittelglieder (40), die von einem Paar von drehbar verbundenen Gliedern gebildet sind, zwischen benachbarten langen Gliedern (14, 15) benachbarter Gliedereinheiten (3) vorgesehen sind, wobei das Unterglied (4) durch die Verbindung (18) des langes Gliedes (14) und des langen Gliedes (15) und die Verbindung (16) des kurzen Gliedes (12) und des kurzen Gliedes (13) in der Gliedereinheit (3) verläuft, während ein mittleres Unterglied (42), das im wesentlichen im rechten Winkel zur Laufrichtung der Gliedereinheit gehalten ist, durch die Verbindung (20) des langen Gliedes (14, 15) und des kurzen Gliedes (12, 13) und die Verbindung (41) des Paares von Gliedern der Mittelglieder (40) verläuft, und daß die Führungsrolle (6) an der Verbindung (18) der langen Glieder (14) und (15) und der Verbindung (20) des langen Gliedes (14, 15) und des kurzen Gliedes (12, 13) vorgesehen ist.

7. Kettengliedvorrichtung nach Anspruch 1, dadurch gekennzeichnet, daß Mittelglieder (40), die von einem Paar von drehbar verbundenen Gliedern gebildet sind, zwischen benachbarten langen Gliedern (14, 15) benachbarter Gliedereinheiten (3) vorgesehen sind, wobei das Unterglied (4) durch die Verbindung (18) der langen Glieder (14) und (15) und der Verbindung (16) der kurzen Glieder (12) und (13) in der Gliedereinheit (3) verläuft, während ein mittleres Unterglied (42), das im wesentlichen im rechten Winkel zur Laufrichtung der Gliedereinheit gehalten ist, durch die Verbindung (20) des langen Gliedes (14, 15) und des kurzen Gliedes (12, 13) und die Verbindung (41) des Paares von Gliedern der Mittelglieder (40) verläuft, daß die Führungsrolle (6) jeweils an der Verbindung (20) des langen Gliedes (14, 15) und des kurzen Gliedes (12, 13) und der Verbindung (16) der kurzen Glieder (12) und (13) angeordnet ist und daß die Führungsrolle (6) an der Verbindung (16) der kurzen Glieder (12) und (13) in vertikal versetzter Position zu der Führungsrolle (6) an der Verbindung (20) des langen Gliedes (14, 15) und des kurzen Gliedes (12, 13) angeordnet ist.

8. Kettengliedvorrichtung nach einem der vorhergehenden Ansprüche, dadurch gekennzeichnet, daß das Unterglied (4) mittels der Gliedereinheit (3) auf der Seite des langen Gliedes (14, 15) und auf der Seite des kurzen Gliedes (12, 13) im Querschnitt gesehen normal zur Laufrichtung der Gliedereinheit (3) gelagert ist, wobei die Lagerung auf der Seite des langen Gliedes (14, 15) nur drehbar und die Lagerung auf der Seite des kurzen Gliedes (12, 13) verschiebbar ist.

9. Kettengliedvorrichtung nach einem der Ansprüche 1 bis 7, dadurch gekennzeichnet, daß das Unterglied (4) mittels der Gliedereinheit (3) auf der Seite des langen Gliedes (14, 15) und auf der Seite des kurzen Gliedes (12, 13) im Querschnitt gesehen normal zur Laufrichtung der Gliedereinheit (3) gelagert ist, wobei die Lagerung auf der Seite des kurzen Gliedes (12, 13) nur drehbar und die Lagerung auf der Seite des langen Gliedes (14, 15) verschiebbar ist.

10. Kettengliedvorrichtung nach einem der vorhergehenden Ansprüche, dadurch gekennzeichnet, daß eine Gruppe von Führungsrollen (6) in der Gliedereinheit (3) vorgesehen ist.

11. Kettengliedvorrichtung nach Anspruch 10, dadurch gekennzeichnet, daß die vierfaltigen Glieder (11), die die Gelenkeinheit (3) bilden, und die Führungsrollen (6) in paarweiser, bezüglich der Ebene, in der das Folienmaterial mittels der Greifelemente gehalten ist, vertikal symmetrischer Position vorgesehen sind.

12. Kettengliedvorrichtung nach einem der vorhergehenden Ansprüche, dadurch gekennzeichnet, daß eine Gruppe von Rollen (28) in der Gliedereinheit (3) vorgesehen ist.

13. Kettengliedvorrichtung nach Anspruch 12, dadurch gekennzeichnet, daß die Rollen (28) so angeordnet sind, daß sie oberhalb und unterhalb des Untergliedes (4) vorstehen.

14. Kettengliedvorrichtung nach Anspruch 12, dadurch gekennzeichnet, daß die Rollen (28) so angeordnet sind, daß sie nur unterhalb des Untergliedes (4) vorstehen.

15. Kettengliedvorrichtung nach einem der vorhergehenden Ansprüche, dadurch gekennzeichnet, daß die Führungsschienen (7) ein Paar von endlos-schleifenförmigen Schienen (7a, 7b) aufweisen.

16. Kettengliedvorrichtung nach Anspruch 15, dadurch gekennzeichnet, daß das Paar von Führungsschienen mit einer Spurweiten-Einstellvorrichtung verbunden ist, um die Spurweite zwischen den Schienen (7a, 7b) in Abhängigkeit von dem Streckungsverhältnis, in dem das Folienmaterial (1) gestreckt werden soll, einzustellen.

17. Streckapparat für ein Folienmaterial (1), mit einem Paar von Kettengliedvorrichtung nach einem der vorhergehenden Ansprüche, die auf jeder Seite des zu streckenden Folienmaterials (1) vorgesehen sind, wobei die Führungsschienen (7) in jeder Kettengliedvorrichtung ein Paar von Schienen (7a, 7b) aufweisen.

18. Streckapparat nach Anspruch 17, dadurch gekennzeichnet, daß das Paar von Führungsschienen, die auf beiden Seiten des zu streckenden Folienmaterials (1) liegen, parallel zu der Laufrichtung des Folienmaterials (1) angeordnet sind und daß die Spurweite zwischen den Führungsschienen (7a, 7b) in jedem Paar so eingestellt ist, daß das Folienmaterial (1) nur in Längsrichtung gestreckt werden kann.

19. Streckapparat nach Anspruch 17, gekennzeichnet durch einen ersten Streckungsabschnitt, in dem die Paare der Führungsschienen in paralleler Ausrichtung verlaufen und die Spurweite zwischen den Führungsschienen (7a, 7b) jedes Paares allmählich in Laufrichtung des Folienmaterials (1) verringert ist, und einen zweiten Streckungsabschnitt, in dem der Abstand zwischen den Paaren der Führungsschienen in Laufrichtung des Folienmaterials (1) zunimmt und die Spurweite zwischen den Führungsschienen (7a, 7b) in jedem Paar konstant gehalten ist, so daß das Folienmaterial (1) im ersten Streckungsabschnitt in Längsrichtung und dann im zweiten Streckungsabschnitt in Querrichtung gestreckt wird.

20. Streckapparat nach Anspruch 17, gekennzeichnet durch einen ersten Streckungsabschnitt, in dem das Paar von Führungsschienen in Laufrichtung des Folienmaterials (1) divergiert und die Spurweite zwischen den Führungsschienen (7a, 7b) jedes Paares konstant gehalten ist, und einen zweiten Streckungsabschnitt, in dem die Paare der Führungsschienen in paralleler Ausrichtung verlaufen und die Spurweite zwischen den Führungsschienen (7a, 7b) jedes Paares allmähllich in Laufrichtung des Folienmaterials verringert ist, so daß das Folienmaterial (1) im ersten Streckungsabschnitt in Querrichtung und dann im zweiten Streckungsabschnitt in Längsrichtung gestreckt wird.

21. Streckapparat nach Anspruch 17, gekennzeichnet durch einen Streckungsabschnitt, in dem das Paar von Führungsschienen in Laufrichtung des Folienmaterials (1) divergiert und die Spurweite zwischen den Führungsschienen (7a, 7b) jedes Paares allmählich in Laufrichtung des Folienmaterials (1) verringert ist, so daß das Folienmaterial (1) gleichzeitig sowohl in Längsals auch in Querrichtung gestreckt wird.

22. Streckapparat nach einem der Ansprüche 17 bis 21, dadurch gekennzeichnet, daß jede der Endlosketten (5), die auf beiden Seiten des zu streckenden Folienmaterials (1) angeordnet sind, mittels eines Kettenzahnrades (50) an der Startposition des Abschnittes sich verringernder Teilung (E), in dem der Abstand der Greifelemente (2) mittels einer Zusammenlegbewegung der Gliedereinheiten (3) der Endloskette (5) verringert wird, angetrieben werden kann.

23. Streckapparat nach einem der Ansprüche 17 bis 21, dadurch gekennzeichnet, daß ein Zahnrad (10-1), das nicht mit der Verbindung (20) des kurzen Gliedes (12, 13) und des langen Gliedes (14, 15), sondern mit der Verbindung (16) des kurzen Gliedes (12) und des kurzen Gliedes (13) in Eingriff steht, an der Startposition des Abschnitts sich verringernder Teilung (E) vorgesehen ist, der nach einem Abschnitt der Greifelemente-Teilung (D) kommt, in dem der Abstand der Greifelemente (2) in der Endloskette (5) am größten ist.

24. Streckapparat nach einem der Ansprüche 17 bis 21, dadurch gekennzeichnet, daß ein vorstehender Abschnitt (60), der auf der entgegengesetzten Seite zum langen Glied (14, 15) hervorsteht, an einem kurzen Glied (12, 13) jeder Gliedereinheit (3) vorgesehen ist und daß eine Führungsplatte (61), die mit dem vorstehenden Abschnitt (60) in Eingriff steht und die Verbindung (16) der kurzen Glieder (12) und (13) auf der Seite des langen Gliedes (14, 15) bewegt, an der Startposition des Abschnittes sich verringernder Teilung (E) vorgesehen ist, der dem Abschnitt der Greifelemente-Teilung (D) folgt, in dem der Abstand der Greifelemente (2) in der Endloskette (5) am größten ist.

25. Streckapparat nach einem der Ansprüche 17 bis 21, dadurch gekennzeichnet, daß an der Verbindung (16) der kurzen Glieder (12) und (13) in der Gliedereinheit (3) eine Führungsplatte (71) angeordnet ist, die mit einem Zahnrad (10-2) in Eingriff tritt, das an der Startposition des Abschnittes sich verringernder Teilung (E) angeordnet ist, der einem Abschnitt der Greifelemente-Teilung (D) folgt, in dem der Abstand der Greifelemente (2) der Endloskette (5) am größten ist, wobei der Radius der Platte (71) größer als der einer anderen Führungsplatte (70) ist, die mit dem Zahnrad (10-2) in Eingriff steht, das an der Verbindung (20) der kurzen Glieder (12) und (13) vorgesehen ist.

26. Streckapparat nach einem der Ansprüche 17 bis 21, dadurch gekennzeichnet, daß ein Zahnrad (10-3) zum Eingriff mit der Gliedereinheit (3) an der Startposition des Abschnittes sich verringernder Teilung (E) vorgesehen ist, der einem Abschnitt der Greifelemente-Teilung (D) folgt, in dem der Abstand der Greifelemente der Endloskette (5) am größten ist, und daß der Abstandskreis-Radius ($R_2$) an der Zahnoberfläche (80) des Zahnrades (10-3), das mit der Gliedereinheit an der Verbindung (16) der kurzen Glieder (12) und (13) in der Gliedereinheit (3) in Eingriff steht, größer als der Abstandskreis-Radius ($R_1$) an der Zahnoberfläche (81) des Zahnrades ist, das mit der Gliedereinheit an der Verbindung (20) der langen Glieder (14, 15) und der kurzen Glieder (12, 13) in Eingriff steht.

27. Streckapparat nach einem der Ansprüche 17 bis 21, dadurch gekennzeichnet, daß ein Ring (90) an der Verbindung (16) des kurzen Gliedes (12) und des kurzen Gliedes (13) jeweils in der Gliedereinheit (3) und an der Startposition eines Abschnittes sich verringernder Teilung (E) vorgesehen ist, der einem Abschnitt der Greifelemente-Teilung (D) folgt, in dem der Abstand der Greifelemente (2) der Endloskette (5) am größten ist, wobei eine Führungsplatte (61) vorgesehen ist, um mit dem Ring (90) in Eingriff zu treten und die Verbindung (16) der kurzen Glieder (12) und (13) auf die Seite der langen Glieder (14, 15) zu bewegen.

**Revendications**

1. Dispositif à maillons pour l'étirage d'une feuille de matériau (1) constituant une chaîne sans fin (5) qui représente une boucle d'unités d'éléments de maillons (3) constituées d'une multitude d'éléments de maillons (11) comportant des maillons courts (12, 13) et des maillons longs (14, 15) pivotant à la manière d'un pantographe avec les maillons de même longueur disposés en étant contigus dans le sens de marche de la chaîne sans fin (5), des sous-maillons (4) maintenus chacun en étant sensiblement perpendiculaires au sens de marche avec un pivot de l'unité d'éléments de maillons (3) obligé de se déplacer longitudinalement avec le sous-maillons (4), des pinces (2) pour maintenir le bord latéral de la feuille de matériau (1), et des rouleaux de guidage (6) en contact avec des rails de guidage (7) situés de façon à fournir le rapport d'étirage désiré de la feuille de matériau (1) dans les directions longitudinale et transversale, caractérisé en ce que les unités d'éléments de maillons (3) sont supportées par des lignes de rouleaux (3), chaque rouleau (28) étant monté en pivotement sur une partie fixe d'un sous-maillon (4) de sorte que les trajets parcourus par les lignes de rouleaux (28) ont entre eux un écartement sensiblement constant.

2. Dispositif à maillons selon la revendication 1, dans lequel le sous-maillon (4) est situé à travers la jonction (18) de longs maillons (14) et (15) et la jonction (16) de maillons courts (12) et (13) dans l'unité d'éléments de maillons (3) et un rouleau de guidage (16) est prévu à la jonction (18) des longs maillons (14) et (15) et à la jonction (16) des maillons courts (12) et (13).

3. Dispositif à maillons selon la revendication 1, dans lequel le sous-maillon (4) est situé à travers la jonction (18) de longs maillons (14) et (15) et la jonction (16) de maillons courts (12) et (13) dans l'unité d'éléments de maillons (3), et un rouleau de guidage (6) est prévu à la jonction (18), des longs maillons (14) et (15) et à la jonction (20) d'un long maillon (14, 15) et d'un maillon court (12, 13).

4. Dispositif à maillons selon la revendication 1, dans lequel le sous-maillon (4) est situé à travers la jonction (18) de longs maillons (14) et (15) et à la jonction (16) de maillons courts (12) et (13) dans l'unité d'éléments de maillons (3), un rouleau de guidage (6) est prévu à la jonction (16) des maillons courts (12) et (13) et à la jonction (20) des longs maillons (14, 15) et des maillons courts (12, 13) et, par conséquent, le rouleau de guidage (6) à la jonction (16) des maillons courts (12) et (13) a sa position décalée verticalement par rapport au rouleau de guidage (6) à la jonction (20) du long maillon (14, 15) et du maillon court (12, 13).

5. Dispositif à maillons selon la revendication 1, dans lequel le sous-maillon (4) est situé à travers la jonction (20) d'un long maillon (14, 15) et d'un maillon court (12, 13) dans l'unité d'éléments de maillons (3) et une partie étendue (22) d'un long maillon (15) sur le côté de la jonction (18) des longs maillons (14) et (15), et un rouleau de guidage (6) est prévu à la jonction (20) d'un long maillon (14, 15) et d'un maillon court (12, 13) et à la jonction (23) du sous-maillon (4) et de la partie étéendue (22) d'un long maillon (15).

6. Dispositif à maillons selon la revendication 1, dans lequel des maillons intermédiaires (40) constitués par une paire d'éléments de maillons connectés en rotation sont prévus entre longs maillons adjacents (14, 15) d'unités adjacentes d'éléments de maillons (3), le sous-maillon (4) est situé à travers la jonction (18) d'un long maillon (14) et d'un long maillon (15) et la jonction (16) d'un mailon court (12) et d'un maillon court (13) dans l'unité d'éléments de maillons (3), alors qu'un sous-maillon intermédiaire (42) maintenu sensiblement perpendiculairement au sens de marche de l'unité d'éléments de maillons est situé à travers la jonction (20) de longs maillons (14, 15) et de maillons courts (12, 13) et la jonction (41) de la paire d'éléments de maillons des maillons intermédiaires (40) et le rouleau de guidage (6) est prévu à la jonction (18) de longs maillons (14) et (15) et à la jonction (20) de longs maillons (14, 15) et de maillons courts (12, 13).

7. Dispositif à maillons selon la revendication 1, dans lequel des maillons intermédiaires (40) constitués par une paire d'éléments de maillons connectés en rotation sont prévus entre les longs maillons contigus (14, 15) d'unités contiguës d'éléments de maillons (3), le sous-maillon (4) est situé sur la jonction (18) de longs maillons (14) et (15) et la jonction (16) de maillons courts (12) et (13) dans l'unité d'éléments de maillons (3) alors qu'un sous-maillon intermédiaire (42) maintenu sensiblement perpendiculairement au sens de marche de l'unité d'éléments de maillons est situé à travers la jonction (20) de longs maillons (14, 15) et de maillons courts (12, 13) et la jonction (41) de la paire d'éléments de maillons des maillons intermédiaires (40), un rouleau de guidage (6) est prévu à la jonction (20) de longs maillons (14, 15) et de maillons courts (12, 13) et la jonction (16) de maillons courts (12) et (13), et le rouleau de guidage (6) à la jonction (16) de maillons courts (12) et (13) a une position décalée verticalement par rapport au rouleau de guidage (6) à la jonction (20) de longs maillons (14, 15) et de maillons courts (12, 13).

8. Dispositif à maillons selon l'une quelconque des revendications précédentes, dans lequel le sous-maillon (4) est supporté par l'unité d'éléments de maillons (3) sur le côté du maillon long (14, 15) et le côté du maillon court (12, 13) dans la section en coupe perpendiculaire au sens de marche de l'unité d'éléments de maillons (3), le support sur le côté du long maillon (14, 15) ne pouvant être que rotatif et le support sur le côté du maillon court (12, 13) étant coulissant.

9. Dispositif à maillons selon l'une quelconque des revendications 1 à 7, dans lequel le sous-maillon (4) est supporté par l'unité d'éléments de maillons (3) sur le côté du long maillon (14, 15) et sur le côté du court maillon (12, 13) dans la section en coupe perpendiculaire au sens de la marche de l'unité d'éléments de maillons, le support sur le côté du maillon court (12, 13) ne pouvant que tourner, et le support sur le côté du long maillon (14, 15) étant coulissant.

10. Dispositif à maillons selon l'une quelconque des revendications précédentes, dans lequel un groupe de rouleaux de guidage (6) est prévu dans l'unité d'éléments de maillons (3).

11. Dispositif à maillons selon la revendication 10, dans lequel les éléments de maillons quadruples (11) constituant l'unité d'éléments de maillons (3) et les rouleaux de guidage (6) sont prévus par paires en symétrie verticale par rapport au plan dans lequel la feuille de matériau est maintenue par la pince.

12. Dispositif à maillons selon l'une quelconque des revendications précédentes, dans lequel un groupe de rouleaux (28) est prévu dans l'unité d'éléments de maillons (3).

13. Dispositif à maillons selon la revendication 12, dans lequel les rouleaux (28) sont prévus pour être en saillie au-dessus ainsi qu'au-dessous du sous-maillon (4).

14. Dispositif à maillons selon la revendication 12, dans lequel les rouleaux (28) sont prévus de manière à n'être en saillie qu'au-dessous du sous-maillon (4).

15. Dispositif à maillons selon l'une quelconque des revendications précédentes, dans lequel les rails de guidage (7) comprennent une paire de rails sans fin en boucle (7a, 7b).

16. Dispositif à maillons selon la revendication 15, dans lequel la paire de rails de guidage est connectée à un organe de réglage d'écartement de manière à ajuster l'écartement entre les rails (7a, 7b) en fonction du rapport d'étirage de la feuille de matériau (1) devant être étirée.

17. Appareil d'étirage pour une feuille de matériau (1) comportant une paire de dispositifs à maillons selon l'une quelconque des revendications précédentes, prévue sur chaque côté de la feuille de matériau (1) à étirer, les rails de guidage (7) dans chaque dispositif à maillons comportant une paire de rails (7a, 7b).

18. Appareil d'étirage selon la revendication 17, dans lequel la paire de rails de guidage placés sur les deux côtés de la feuille de matériau (1) à étirer sont parallèles au sens de marche de la feuille de matériau (1) et l'écartement entre les rails de guidage (7a, 7b) de chaque paire est ajusté de façon à permettre l'étirage de la feuille de matériau (1) dans le seul sens longitudinal.

19. Appareil d'étirage selon la revendication 17, dans lequel on a prévu une première section d'étirage dans laquelle la paire de rails de guidage est en formation parallèle et l'écartement entre les rails de guidage (7a, 7b) dans chaque paire diminue progressivement dans le sens de marche de la feuille de matériau (1) et une seconde section d'étirage dans laquelle la distance entre la paire de rails de guidage diverge dans le sens de la marche de la feuille de matériau (1) et l'écartement entre les rails de guidage (7a, 7b) dans chaque paire est maintenu constant de sorte que la feuille de matériau (1) est étirée dans le sens longitudinal dans la première section d'étirage, puis étirée dans la direction transversale dans la seconde section d'étirage.

20. Appareil d'étirage selon la revendication 17, dans lequel on a prévu une première section d'étirage dans laquelle la paire de rails de guidage diverge dans le sens de la marche de la feuille de matériau (1) et l'écartement entre les rails de guidage (7a, 7b) dans chaque paire est maintenu constant et une seconde section d'étirage dans laquelle la paire de rails de guidage est située en formation parallèle et l'écartement entre les rails de guidage (7a, 7b) de chaque paire diminue progressivement dans le sens de la marche de la feuille de matériau de sorte que la feuille de matériau (1) est étirée dans le sens transversal dans la première section d'étirage, puis étirée dans le sens longitudinal dans la seconde section d'étirage.

21. Appareil d'étirage selon la revendication 17, dans lequel on a prévu une section d'étirage dans laquelle la paire de rails de guidage diverge dans le sens de la marche de la feuille de matériau (1) et l'écartement entre les rails de guidage (7a, 7b) dans chaque paire diminue progressivement dans le sens de la marche de la feuille de matériau (1) de sorte que la feuille de matériau (1) est étirée en même temps dans le sens longitudinal et dans le sens transversal.

22. Appareil d'étirage selon l'une quelconque des revendications 17 à 21, dans lequel chacune des chaînes sans fin (5) prévue sur les deux côtés de la feuille de matériau (1) devant être étirée peut être entraînée par un pignon moteur (50) à la position de départ d'une section à pas diminuant (3) où le pas des pinces (2) diminue par le mouvement de pliage des unités d'éléments de maillons (3) de la chaîne sans fin (5).

23. Appareil d'étirage selon l'une quelconque des revendications 17 à 21, dans lequel un pignon (10-1) qui est en prise non avec la jonction (20) d'un maillon court (12, 13) et d'un long maillon (14, 15) mais avec la jonction (16) d'un maillon court (12) et d'un maillon court (13) est prévu à la position de départ d'une section à pas diminuant (E) qui vient après une section à pas de pince (D) dans laquelle le pas des pinces (2) de la chaîne sans fin (5) est le plus long.

24. Appareil d'étirage selon l'une quelconque des revendications 17 à 21, dans lequel une partie proéminente (60) en saillie sur le côté opposé au côté du long maillon (14, 15) est prévue sur un maillon court (12, 13) de chaque unité d'éléments de maillons (3), et une plaque de guidage (61) qui est en contact avec la partie proéminente (60) et déplace la jonction (16) des maillons courts (12) et (13) jusqu'au côté du maillon long (14, 15) est prévue à la position de départ d'une section à pas diminuant (E) suivant une section à pas de pince (D) dans laquelle le pas des pinces (2) dans la chaîne sans fin (5) est le plus long.

25. Appareil d'étirage selon l'une quelconque des revendications 17 à 21, dans lequel à la jonction (16) des maillons courts (12) et (13) dans l'unité d'éléments de maillons (3) est prévue une plaque de guidage (71) qui s'engage dans un pignon (10-2) prévu à la position de départ d'une section à pas diminuant (E) suivant une section à pas de pince (D) dans laquelle le pas des pinces (2) de la chaîne sans fin (5) est le plus long, le rayon de la plaque (71) étant supérieur à celui d'une autre plaque de guidage (70) qui est en prise avec le pignon (10-2) prévu à la jonction (20) des maillons courts (12) et (13).

26. Appareil d'étirage selon l'une quelconque des revendications 17 à 21, dans lequel un pignon (10-3) destiné à être en contact avec l'unité d'éléments de maillons (3) est prévu à la position de départ d'une section à pas décroissant (E) suivant une section à pas de pince (D) dans laquelle le pas des pinces de la chaîne sans fin (5) est le plus long, et le rayon du cercle primitif ($R_2$) de la surface dentée (80) du pignon (10-3) qui est en prise avec l'unité d'éléments de maillons à la jonction (16) des maillons courts (12) et (13) dans l'unité d'éléments de maillons (3) est supérieur au rayon du cercle primitif ($R_1$) de la surface dentée (81) du pignon qui est en prise avec l'unité d'élément de maillons à la jonction (20) des longs maillons (14, 15) et des maillons courts (12, 13).

27. Appareil d'étirage selon l'une quelconque des revendications 17 à 21, dans lequel une bague (90) est prévue à la jonction (16) d'un maillon court (12) et d'un maillon court (13) dans chaque unité d'éléments de maillons (3) et à la position de départ d'une section à pas décroissant (E) suivant une section à pas de pince (D) dans laquelle le pas des pinces (2) de la chaîne sans fin (5) est le plus long, une plaque de guidage (61) pour venue en contact avec la bague (90) et pour déplacer la jonction (16) des maillons courts (12) et (13) jusqu'au côté des maillons longs (14, 15) est prévue.

FIG.1

FIG.2

0 149 878

# FIG.3

0 149 878

# FIG.4

# FIG.5

4

# FIG.6

# FIG.7

# FIG.8

# FIG.9

# FIG.10

# FIG.11

# FIG.12

# FIG.13

# FIG.14

# FIG.15

# FIG.16

FIG.17

# FIG.18

# FIG.19

# FIG.20

FIG.21

# FIG.22

# FIG.23

# FIG.24

# FIG.25

# FIG.26

# FIG.27

# FIG.28

# FIG.29